# EUROPEAN PATENT APPLICATION

(11) **EP 1 376 587 A2**
(43) Date of publication of application: **02.01.2004**
(21) Application number: 03013455.5
(22) Date of filing: 24.06.2003
(51) Int. Cl.: G11B 27/10, G11B 19/02, G11B 27/34, H04N 5/445, H04N 5/85, G06F 17/30

(54) **Video data reproduction apparatus, schedule data, video data reproduction method, and video data reproduction program**

(30) Priority: 24.06.2002 JP 2002183336; 16.06.2003 JP 2003170739
(71) Applicant: Kabushiki Kaisha Toshiba, Tokyo 105-8001 (JP)
(72) Inventor: Kambayashi, Toru, Intell. Property Division, Minato-ku, Tokyo 105-8001 (JP); Kaneko, Toshimitsu, Intell. Property Division, Minato-ku, Tokyo 105-8001 (JP); Takahashi, Hideki, Intell. Property Division, Minato-ku, Tokyo 105-8001 (JP); Hori, Osamu, Intell. Property Division, Minato-ku, Tokyo 105-8001 (JP)
(74) Representative: HOFFMANN - EITLE

(57) **Abstract**

Selecting means (33, 34, 36) selects an object to be reproduced in video data contents and obtain a corresponding object related data, the object related data being related to the object and including a start time at which the object appears in the video data contents. First acquisition means (36) acquires the start time from the object related data. Reproduction means (2, 32, 31, 36) starts reproducing the video data contents based on the start time.

## Description

The present invention relates to a video data reproduction apparatus having a navigation function for video data contents, and schedule data, a video data reproduction method and a video data reproduction program that realize the navigation function.

In accordance with recent widespread use of PCs, the Internet, DVDs, etc., various navigation functions have been proposed, which enable users to acquire, display, etc. information related to contents, such as movies, as well as to enjoy the contents.

In particular, there is a demand for a function for enabling users to, for example, click a certain object in contents, using a mouse, thereby executing a predetermined action related to the object. For example, when a user clicks a person or object in a moving picture, such as a movie, using a mouse, a narrative text concerning the clicked person or object is displayed.

As a basic technique for realizing the above function, a method has been proposed for effectively defining the area for a particular object in a moving picture, using arbitrary space-time area information of an amount corresponding to a plurality of frames. However, almost nothing has yet to materialize as a specific system realizing the above feature.

The present invention has been developed in light of the above, and aims to provide a video data reproduction apparatus having an effective navigation function for video data contents, and schedule data, a video data reproduction method and a video data reproduction program that realize the navigation function.

The present invention also aims to provide a video data reproduction apparatus, method and program capable of performing a jump from a certain page to a target object to activate the object.

The invention further aims to provide schedule data for effectively displaying an object.

According to a first aspect of the invention, there is provided a video data reproduction apparatus comprising: a selecting unit configured to select an object to be reproduced in video data contents and configured to obtain a corresponding object related data, the object related data being related to the object and including a start time at which the object appears in the video data contents; a first acquisition unit configured to acquire the start time from the object related data; and a reproduction unit configured to start reproducing the video data contents based on the start time.

According to a second aspect of the invention, there is provided a schedule data associated with an object which appears in video data contents, the object being reproduced by a reproduction apparatus, the schedule data comprising: a start time at which the object appears in the video data contents.

According to a third aspect of the invention, there is provided a video data reproduction method comprising: selecting an object to be reproduced in video data contents; obtaining a corresponding object related data, the object related data being related to the object and including a start time at which the object appears in the video data contents; acquiring the start time from the object related data; and starting reproducing the video data contents based on the start time.

According to a fourth aspect of the invention, there is provided a video data reproduction program stored in a medium which can be read by a computer, comprising: means for instructing the computer to select an object to be reproduced in video data contents and obtain a corresponding object related data, the object related data being related to the object and including a start time at which the object appears in the video data contents; first acquisition means for instructing the computer to acquire the start time from the object related data; and means for instructing the computer to start reproducing the video data contents based on the start time.

According to a fifth aspect of the invention, there is provided a video data reproduction apparatus which reproduces an object, the object being appearing in video data contents, the video data reproduction apparatus comprising: a first acquisition unit configured to acquire schedule data which includes a start time at which the object appears in the video data contents; a second acquisition unit configured to acquire the start time from the schedule data; and a reproduction unit configured to start reproducing the video data contents based on the start time.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating a video reproduction apparatus according to a first embodiment of the invention;
FIG. 2 is a view illustrating a system configuration example of the video reproduction apparatus of FIG. 1;
FIG. 3 is a view illustrating the structure of schedule data;
FIG. 4 is a view illustrating a schedule of the period of the activated state of each object based on certain schedule data;
FIG. 5 is a view illustrating the structure of mask data;
FIG. 6 is a view illustrating the structure of object data;
FIG. 7A is a view illustrating an object moving in frames with lapse of time;
FIG. 7B is a view illustrating the frames appearing in FIG. 7A;
FIG. 7C is a view illustrating the object appearing in FIG. 7A;
FIG. 8 is a view useful in explaining a reverse link operation ;
FIG. 9 is a flowchart useful in explaining the operation of the video reproduction apparatus performed during the reverse link operation;
FIG. 10 is a flowchart useful in explaining the operation of the V-click engine, appearing in FIG. 1, performed during the reverse link operation;
FIG. 11 is a view illustrating a video display window subjected to mask processing;
FIG. 12 is a view illustrating a state in which a visual object and a cursor overlap each other;
FIG. 13 is a view illustrating a state in which a balloon protrudes from the visual object;
FIG. 14 is a flowchart useful in explaining the operation of the video reproduction apparatus of FIG. 1 during the reproduction operation of the apparatus;
FIG. 15 is a flowchart useful in explaining the operation of the V-click engine appearing in FIG. 1;
FIG. 16 is a flowchart useful in explaining the operation of the V-click decoder appearing in FIG. 1;
FIG. 17 is a view illustrating a state in which the video reproduction apparatus is connected to a server via the Internet;
FIG. 18 is a block diagram illustrating a video reproduction apparatus according to a second embodiment of the invention;
FIG. 19 is a table illustrating the relationship between the contents of V-click data items and contents IDs;
FIG. 20 is a table illustrating the relationship between URLs indicating the locations of V-click data items and contents IDs;
FIG. 21 is a flowchart useful in explaining downloading of V-click data; and
FIG. 22 is a flowchart useful in explaining certification of V-click data.

Embodiments of the invention will be described with reference to the accompanying drawings.

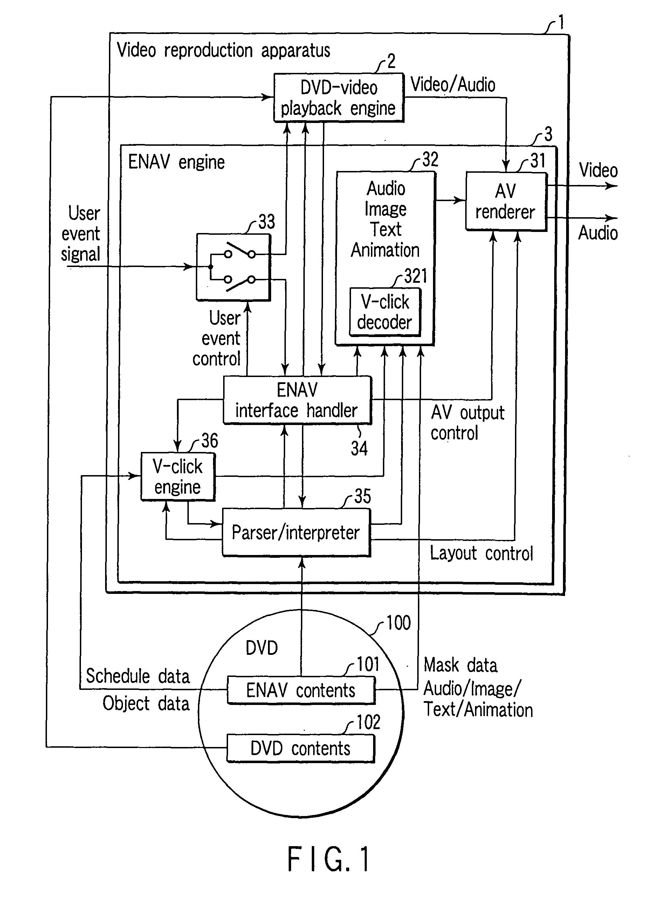

FIG. 1 is a block diagram illustrating a video reproduction apparatus according to a first embodiment of the invention.

A video reproduction apparatus 1 of the first embodiment contains a DVD-video playback engine (hereinafter referred to simply as a "playback engine") 2 for reproducing a DVD, and extension navigation engine (hereinafter referred to simply as an "ENAV engine") 3.

The video reproduction apparatus 1 may have one or more functions similar to those employed in conventional DVD players.

A DVD 100 stores ENAV contents 101 and DVD contents 102. The DVD contents 102 include, e.g., audio/video contents (such as movie contents), or just video contents. ENAV contents 101 contain information related to particular DVD contents 102 that correspond to the ENAV contents. The ENAV contents are, for example, audio data, still image data, text data, animation data, and V-click data that provides an environment for a V-click described later. In the embodiment, three types of V-click data items, i.e., schedule data, mask data and object data, are provided for one DVD contents 102. These three types of V-click data items are described in detail later.

The ENAV engine 3 detects a user event signal that is generated as a result of a user operation made in association with DVD contents 102, thereby reproducing the DVD contents 102, displaying information related to the DVD contents 102, or displaying information related to a particular object during reproduction of the DVD contents 102.

The ENAV engine 3 comprises an AV renderer 31, element decoder 32, user event controller 33, extension navigation interface handler (hereinafter referred to simply as a "handler"), parser/interpreter 35, and V-click engine 36. The element decoder 32 includes a V-click decoder 321.

The playback engine 2 reproduces a desired part of DVD contents 102 recorded on a DVD. In other words, the playback engine 2 reads DVD contents 102 recorded on a DVD, decodes (or decrypts and decodes) it, and outputs the decoded data to the AV renderer 31.

The playback engine 2 detects, via the user event controller 33, a user event signal that occurs as a result of a user operation. The user event signal contains, for example, a reproduction instruction, fast-forward instruction, random-access instruction, instruction to change the quality of a to-be-reproduced video image, and instruction to jump the position of reproduction. When the playback engine 2 receives a user event signal instructing reproduction, it supplies the handler 34 with the name of a to-be-reproduced file in DVD contents 102 (this name may hereinafter be referred to as a "reproduction filename").

The playback engine 2 outputs, to the handler 34 periodically or when necessary, the time stamp of image data that is being reproduced. The time stamp indicates the current time of reproduction and corresponds to the reproduction position of the DVD contents 102 (image data) that is being reproduced. On the other hand, the playback engine 2 receives, via the handler 34, a command for controlling the reproduction of DVD contents 102. Specifically, the playback engine 2 receives, from the handler 34, the name of the to-be-reproduced file in the DVD contents 102 and a reproduction start time, thereby starting the reproduction at the position that the reproduction start time indicates.

The AV renderer 31 receives decoded data from the playback engine 2. Further, the AV renderer 31 receives, from the element decoder 32, element data including video data and audio data generated based on ENAV contents 101. The element data is, for example, audio data, still image data, text data or animation data. The element data also includes highlight element data, mosaic element data, etc. However, the type of image processing is not limited to the above, and a number of image processes exist.

The AV renderer 31 overlays the data received from the playback engine 2 on the element data received from the element decoder 32. After that, the AV renderer 31 converts the overlaid data into an analog video signal and/or an analog audio signal that can be output to a monitor apparatus 8 having a display window 81 and speaker 84, etc., described later. Of course, there may be a case where no element data is output from the element decoder 32 and therefore is not overlaid on the data from the playback engine 2. In this case, video data is reproduced on the basis of only the data only received from the playback engine 2.

From the input ENAV contents 101, the element decoder 32 generates element data, and outputs this data to the AV renderer 31.

The V-click decoder 321 processes V-click engine data received from the V-click engine 36. This V-click engine data indicates, for example, a non-mask area, balloon contents and a balloon display position, etc. at the present time.

Upon receiving the balloon contents and the balloon display position from the V-click engine 36, the V-click decoder 321 stores it in an internal memory of the V-click decoder 321. If the balloon contents and the balloon display position are already stored in the internal memory, they are updated with new data. When mask display is performed, it is very possible that the data in the non-mask area is frequently updated. The V-click decoder 321 checks the internal memory, and generates a balloon on the basis of the balloon contents and the balloon display position if the balloon contents is stored in the internal memory. The generated balloon is recorded to the internal memory.

On the basis of the present time, the V-click decoder 321 generates a mask based on the pattern and color designated by mask data, described later, contained in the ENAV contents 101. At this time, the V-click decoder 321 receives the reproduction filename from the parser/interpreter 35, thereby executing mask-processing based on mask data corresponding to the reproduction filename.

The user event controller 33 processes the instruction(s) contained in the above-described instructions contained in the user event signal that occurs as a result of a user operation. The user event controller 33 receives a user event signal and outputs a predetermined module. The type of module depends upon the type of instruction contained in a user event signal.

For example, a user event signal, which contains an instruction to perform reproduction and an instruction to change the image quality of reproduced video data, are only output to the playback engine 2. On the other hand, a user event signal containing an instruction to jump the position of reproduction, is output to both the playback engine 2 and handler 34. Further, instructions contained in click events signals caused by a V-click, a click related to a reverse link operation, other types of click, etc., are supplied from the user event controller 33 to the handler 34. Furthermore, the user event controller 33 receives user event signals for instructing ON/OFF of mask display, ON/OFF of balloon display, etc., and outputs predetermined modules.

The handler 34 receives, from the user event controller 33, an instruction to jump the position of reproduction, fast-forward instruction, random-access instruction, etc. The handler 34 receives, periodically or when necessary, the time stamp of image data that is being reproduced. The handler 34 also receives the reproduction filename from the playback engine 2. The handler 34 outputs the reproduction filename to the parser/interpreter 35 and V-click engine 36. The handler 34 further receives, from the parser/ interpreter 35, a DVD reproduction instructing signal containing information indicative of the reproduction filename and reproduction start time. On the basis of the input data, the handler 34 supplies the playback engine 2 with a command for controlling the reproduction of DVD contents 102. The handler 34 also supplies the user event controller 33 with a control signal for the controller 33, and supplies the AV renderer 31 with a control signal for controlling video data and audio data.

The parser/interpreter 35 reads, when necessary, a script from ENAV contents 101, interprets the script and executes the script on the basis of the interpretation. This script is used to, for example, control the reproduction of DVD contents 102, display and reproduction of information relating to the DVD contents 102, and acquisition, display and reproduction of predetermined contents from the Internet.

Further, the parser/interpreter 35 receives a script from the V-click engine 36, interprets the script and executes the script on the basis of the interpretation. This script is output from the V-click engine 36 when a user click event causes a certain object to be hit.

When the user event controller 33 has input a user event signal, the parser/interpreter 35 receives the instruction(s) contained in this user event signal via the handler 34. For example, if the instruction is the issuance of a mask display ON/OFF instruction, the parser/interpreter 35 supplies the V-click engine 36 with a signal for setting ON/OFF of mask display.

Further, if the instruction contained in a user event signal is an instruction to click an object, the parser/interpreter 35 supplies the V-click engine 36 with a signal indicative of the position of this click generation. After that, the parser/interpreter 35 receives a script corresponding to the instruction contained in the signal from the V-click engine 36, and executes the script. In another example, the parser/ interpreter 35 acquires, from tag data contained in a user event signal, the filename, reproduction start time, and the label of an object, thereby supplying the handler 34 with an instruction to reproduce the to-be-reproduced file in the DVD contents 102 and reproduction start time.

The V-click engine 36 reads data from the "MPEG7 field" contained in an object file, and waits for a user click event (V-click) signal. The click event signal designates a point of space-time (i.e., a space-time point). In other words, a click event signal designates space coordinates and a time coordinate. The V-click engine 36 determines whether or not the point given by a click event signal is included in the three-dimensional area (i.e., two space dimensions + one time dimension) occupied by an object. If it is included, the V-click engine 36 determines that a click corresponding to the click event signal has hit an object, and the parser/interpreter 35 executes a script contained in object data of the object, or jumping to a URL contained in the object data.

There is a case where data in the "MPEG7 field" describes a curve in space-time. For example, data concerning the position of a balloon describes such a curve. In this case, the V-click engine 36 determines whether or not the point clicked by a user is included in the balloon. If it is included, the V-click engine 36 determines that this click event has caused an object to be hit, thereby executing a script contained in object data of the object.

The V-click engine 36 sets ON/OFF of mask display under the control of the parser/interpreter 35. Further, the V-click engine 36 stores the state of mask display ON/OFF as a flag in an internal memory. Similarly, the V-click engine 36 sets ON/OFF of balloon display, utilizing the parser/interpreter 35, and stores the state of balloon display ON/OFF as a flag in the internal memory.

Upon receiving, from the parser/interpreter 35, the reproduction filename and an instruction to read corresponding contents, the V-click engine 36 reads a schedule file corresponding to the reproduction filename from ENAV contents 101. If necessary, the V-click engine 36 reads, from the ENAV contents 101, an object file corresponding to the schedule file.

Further, the V-click engine 36 receives, from the handler 34, the time stamp of a reproduction image contained in the DVD contents 102. If necessary, the V-click engine 36 computes the configuration of an object on the basis of the time stamp and object data, thereby detecting, for example, the non-mask area and the balloon display position, etc., and extracting corresponding balloon contents from the object data.

Upon reading an object file, the V-click engine 36 causes the object to be ready. For example, when a click event (V-click) signal occurs, the V-click engine 36 registers this object as one of the objects for determining whether or not the time and the click position will be just hit. There is a case where labels assigned to a plurality of objects are pre-registered as non-mask objects in the V-click engine 36. For example, ENAV contents 101 contain the labels of to-be-registered non-mask objects, and registration is performed on the basis of these labels. If the mask display is ON, the V-click engine 36 computes the configuration of a non-mask object at the present time, and outputs the computed configuration as a non-mask area to the V-click decoder 321. If a plurality of non-mask objects exist, the logical sum of the non-mask areas is output as a non-mask area to the V-click decoder 321.

There is also a case where labels assigned to a plurality of objects are pre-registered as balloon display objects in the V-click engine 36. For example, ENAV contents 101 contain the labels of to-be-registered balloon display objects, and registration is performed on the basis of these labels. If the balloon display is ON, the V-click engine 36 computes the position of a balloon display object at the present time and the balloon display position, and outputs the contents and the balloon display position of the balloon display object to the V-click decoder 321.
The balloon display position is predetermined. For example, this position is above and to the right of an object. The V-click engine 36 may be constructed so that it can change the balloon display position, such as to be left or right of an object, or above left or right of the object, by appropriately changing the variable of the engine 36. Upon receiving a click event signal, the V-click engine 36 determines whether or not the objects in the ready state include an object that contains the space-time point designated by the click position and the present time. The V-click engine 36 compares the reproduction end time of each object with the present time, thereby releasing, from the ready state, each object whose reproduction end time has been exceeded, and deleting it from its internal memory. The script of each hit object is send to the parser/interpreter 35.

The V-click engine 36 outputs any non-mask area and balloon contents and a position to the V-click decoder 321. The V-click decoder 321 processes the V-click engine data supplied from the V-click engine 36. Specifically, the decoder 321 synthesizes the images corresponding to V-click engine data , and generates masks.

A description will now be given of the operation of the V-click engine 36 performed during a reverse link operation. A link operation indicates, for example, displaying, on a browser screen, information that a predetermined URL indicates when an object in a moving picture is clicked. On the other hand, a reverse link operation indicates an operation opposite to the link operation. For example, the reverse link operation indicates displaying, on the moving picture, the video data contents corresponding to the object that a object name indicates, when a button selected from a list of object names displayed on the browser screen is clicked.

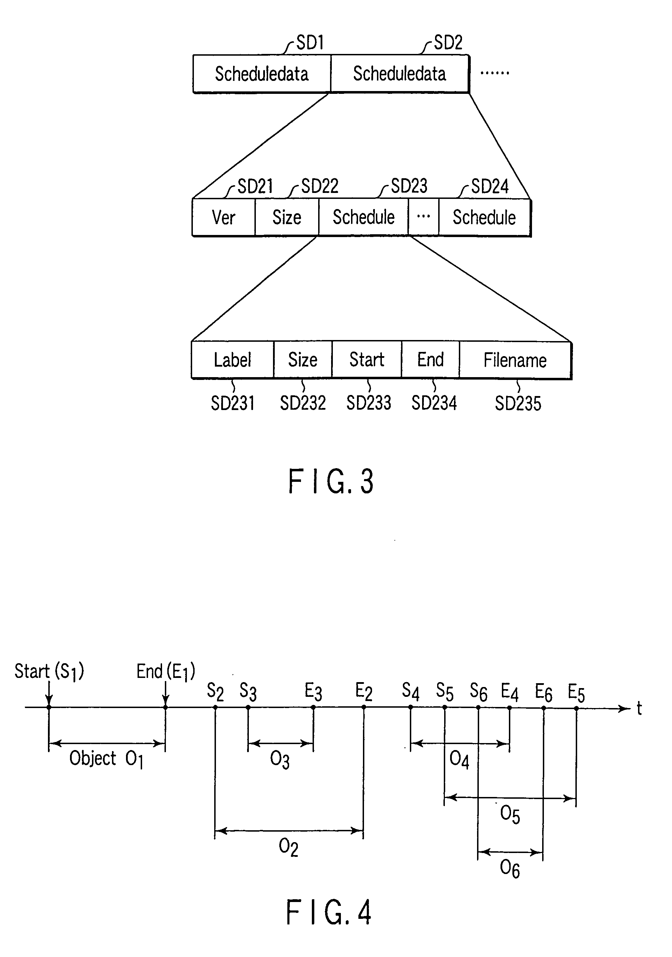

In the reverse link operation, firstly, the V-click engine 36 clears all objects that are currently in the ready state. Subsequently, the engine 36 reads schedule data corresponding to the reproduction filename. The schedule data will be described later with reference to FIGS. 3 and 4. After that, the V-click engine 36 acquires present time data from the handler 34, reads, in reference with the present time data according to the schedule data, the object data of all necessary objects described in the read schedule data, and makes the objects in a ready state. Since the V-click engine 36 thus reads schedule data from ENAV contents 101, it can detect all necessary objects and the object data of each object.

Reverse link operation can be executed without schedule data. In this case, the reproduction filename of DVD contents 102 is input, and all object data needed for the input reproduction file is made in a ready state. Thus, schedule data is not always needed for reverse link operation.

Further, the V-click engine 36 turns on, for example, mask display. In this case, the engine 36 clears all currently registered non-mask objects, and registers, as a non-mask object, the label of the object received from the parser/interpreter 35. The V-click engine 36 generates a non-mask area for the non-mask object, and outputs the non-mask area to the V-click decoder 321. If balloon display is in the ON state, the V-click engine 36 obtains the position of the object to be displayed as a balloon at the present time, computes the display position of the balloon, and outputs the balloon contents and the balloon display position of this object to the V-click decoder 321. Upon receiving a click event signal, the V-click engine 36 determines whether or not the currently valid objects include an object that contains the space-time point determined from the click position and the present time.

There can be DVD contents 102 provided with ENAV contents 101, and those without ENAV contents 101. The V-click engine 36 reads schedule data and object data etc. described later, from ENAV contents 101. ENAV contents 101 contain the label of an object to be registered as a balloon display target. On the basis of this label, the V-click engine 36 registers the object as a balloon display target.

For example, when a script of ENAV contents 101 is executed, the object in a moving picture is displayed, highlighted.

The embodiment describes that the video reproduction apparatus is provided with a structure for reproducing audio data. However, this apparatus can be constructed so that no audio data is reproduceable. Further, although no description is given of the reproduction of audio data in DVD contents, assume that audio data is reproduced in synchronism with video data in the DVD contents.

In the embodiment, each frame of video data in DVD contents 102 is specified by a timestamp attached to each frame. It is a matter of course that information other than the timestamp may be used to specify each frame of video data.

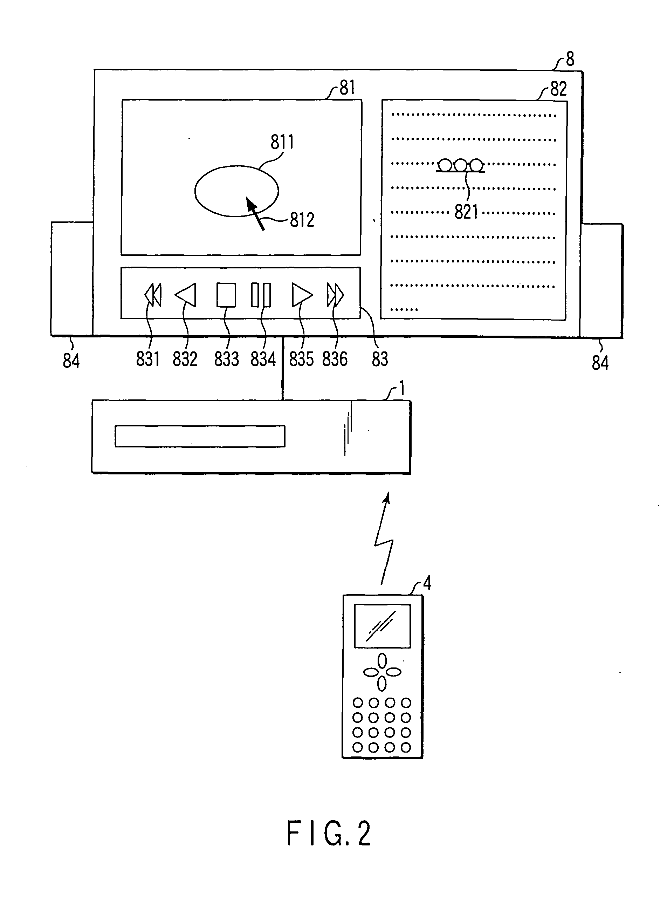

FIG. 2 shows a system configuration example of the video reproduction apparatus 1 of FIG. 1.

The video reproduction apparatus 1 is connected to the monitor apparatus 8 such as a TV set. As seen from FIG. 2, the video reproduction apparatus 1 provides a multi-window environment. In the example of FIG. 2, a video display window 81 is provided for displaying contents of a DVD 100, such as a movie. An information display window 82 is provided for displaying an information screen such as a browser screen. A DVD operation window 83 is provided for operating the DVD 100, utilizing soft keys, such as reproducing, stopping or fast-forwarding the DVD. It is preferable that a user can set the size, position, display/non-display, etc., of the video display window 81, the information display window 82 and the DVD operation window 83.

The video reproduction apparatus 1 of the embodiment is operable using a remote controller 4. Further, in the example of FIG. 2, a speaker 84 outputs, for example, the sound attached to video data displayed on the video display window 81.

In the embodiment, the remote controller 4 and the video reproduction apparatus 1 enable a user to operate a cursor 812 displayed on the screen of the monitor apparatus 8, thereby realizing a graphical user interface. In the example of FIG. 2, an object 811, link 821 and buttons 831 - 836 operate when a user clicks the cursor 812. The cursor 812 can be moved by a movement button on the remote controller 4. For example, when the object 811 is clicked, a predetermined event occurs. When the link 821 is clicked, information connected to the link is displayed. Further, when the button 835 is clicked, reproduction of DVD contents 102 is started.

In the embodiment, click of an object is called, in particular, a "V-click (video click)" to discriminate this click from a click of an icon, such as a reproduction button, or a click of a link on a browser screen. In FIG. 2, a V-click means a click of the object 811. An object is a two-dimensional area defined by the frames ranging from a certain start frame to a certain end frame (a moving picture contained in DVD contents 102 comprises frames). The position or the attribute (such as the configuration) of this area can vary in units of frames. The object may be, for example, a particular person, vehicle, building, etc., or part of them, for example, the head of the person, the bonnet of the vehicle or the entrance of the building, in a moving picture.

For example, the object 811 indicates, in the form of an approximate oval, the area of an object or a personal appearing in a moving picture. Such an object or a person in a moving picture will be referred to as a "visual object". In FIG. 2, the image corresponding to a visual object is not shown. Further, although the object 811 is shown in FIG. 2, it may not always be displayed. Alternatively, a user may determine whether or not the object 811 should be displayed, or the display of the object 811 may be automatically controlled on the basis of certain information.

A set of two-dimensional object areas from the start frame to the end frame is three-dimensional since the dimension of time is included in it. When a V-click is performed at a point included in the three-dimensional area, the object is hit by the V-click. This three-dimensional area can be described in various ways.

The above-described system configuration can be modified in various ways. For example, another window may be added to the video display window 81, the information display window 82 and the DVD operation window 83.

The video reproduction apparatus 1 and remote controller 4 can be connected by radio using an infrared ray, Bluetooth (registered trademark), or any other means. Further, the remote controller 4 may be dedicated to the video reproduction apparatus 1 or may be a versatile one. For example, the remote controller 4 may be formed of a mobile telephone terminal utilizing Bluetooth.

Furthermore, the video reproduction apparatus 1 may have a function or functions employed in general DVD players. Of course, the video reproduction apparatus 1 may be formed as one body with the monitor apparatus 8 such as a TV set (for example, a TV set with a video reproduction function can be used).

In addition, the remote controller 4 may have a conventional input unit such as a reproduction button 835, as well as an input unit for operating the cursor 812. Further, the video reproduction apparatus 1 itself may have an input unit such as a reproduction button. A mouse or a keyboard may be connectable to the video reproduction apparatus 1 itself. The speaker 84 may be built in the monitor apparatus 8.

Now three types of V-click data items are described.

FIG. 3 shows the structures of schedule data items SD1, SD2, ···.

The schedule data items SD1 and SD2 are used to preset the start position and end position of each of activated states of objects corresponding to certain moving picture contents. Here the activated state of the object indicates that the object is positioned in a period in which the V-click can be received.

The schedule data items SD1, SD2, ··· are shown as "Scheduledata" in FIG. 3. In general, a plurality of schedule data items SD1, SD2, ··· are provided as shown in the top portion of FIG. 3. These schedule data items are called, as a whole, a "schedule file". The schedule data items are of different versions. In accordance with the reproduction capability of the video reproduction apparatus 1, schedule data of a certain version is read. In other words, different schedule data items are read if video reproduction apparatuses 1 of different reproduction capabilities are used. Further, the video data reproduction apparatus 1 may be constructed so that it is provided with a version corresponding to its reproduction capability, and this version is automatically referred to, thereby reading schedule data corresponding thereto.

As seen from the middle portion of FIG. 3, the schedule data SD2 comprises three types of field - fields for the above-mentioned "version" (Ver) SD21, "size" (Size) SD22 and "schedule" data items (Schedule) SD23, ···, SD24.

The "size" SD22 contains a numerical value indicative of the data capacity of the schedule data SD2. The "size" SD22 also contains a numerical value used as an offset value. This value is used for skipping to next schedule data having a version different from selected "version" SD21, if the selected version data is not suitable for the video reproduction apparatus 1. If a break point can be set between subsequent "version" data items, the "size" can be dispensed with.

The "schedule" data items SD23, ···, SD24 are each used to preset the start position and end position of the activated state of a certain object. If schedule data manages a plurality of objects, it has a plurality of "schedule" data items SD23, ···, SD24.

As shown in the bottom portion of FIG. 3, the "schedule" SD23 has five types of field. Specifically, the "schedule" SD23 comprises "label" (Label) SD231, "size" (Size) SD232, "start timestamp" (Start) SD233, "end timestamp" (End) SD234 and "object filename" (Filename) SD235.

The "label" SD231 contains a name corresponding to each object managed by the "schedule" SD23. This name is an object name or an object identifier.

The "size" SD232 in the "schedule" SD23 contains a numerical value indicative of the data capacity of each object managed by the "schedule" SD23. The "size" SD232 also contains a numerical value used as an offset value. This value is used for skipping to next schedule data having a label different from the "label" SD231, if the selected "label" SD231 does not correspond to the object to be currently reproduced by the video reproduction apparatus 1. If a break point can be set between subsequent "label" data items, the "size" SD232 can be dispensed with.

The "start timestamp" SD233 indicates the start time of the activated state of an object corresponding to the "label" SD231 contained in the "schedule" SD23 related to the "start timestamp", or indicates the start position of the activated state of the object in moving picture contents to be reproduced. If the time interval of activated states between the portions of the moving picture contents marked by objects, chapters, etc. is known beforehand, the start positions of the activated state of the objects can be computed from the start times of the activated state of the objects.

The "end timestamp" SD234 indicates the end time of the activated state of an object corresponding to the "label" SD231 contained in the "schedule" SD23 related to the end timestamp data, or indicates the end position of the activated state of the object in moving picture contents to be reproduced.

The "start timestamp" SD233 and "end timestamp" SD234 are predetermined in units of "label" data items SD231, i.e., objects, thereby determining periods of the activated states of objects in the moving picture contents.

The "object filename" SD235 contains a filename with which the corresponding object is defined, i.e., the name of an object file containing object data. As described in the second embodiment, if object data exists on the Internet, a URL may be used as its object filename.

In the video reproduction apparatus 1, when the video data of to-be-reproduced DVD contents 102 is designated using, for example, its reproduction filename, schedule data corresponding to the video data is read. The schedule data defines the object data that should be read and activated, the reproduction scene of the video data in which the object data should be read and activated, and the reproduction scene in which the activated state of the object data should be finished.

Further, in the reverse link operation described later, there is also a case where the schedule data is read to refer to the definition of an object, the start time of the activated state of the object, etc., using an object name stored in the "label" SD231 of the object data.

In the example of FIG. 3, the schedule file contains a plurality of schedule data items SD1, SD2, ···. However, the schedule file may have only one schedule data item. Further, if only one version is given to schedule data, the "version" SD21 field is not needed.

FIG. 4 is a view illustrating the schedule of the period of the activated state of each object in certain schedule data.

As described above with reference to FIG. 3, the schedule data defines the object data that should be read and activated, the reproduction scene of the video data in which the object data should be read and activated, and the reproduction scene in which the activated state of the object data should be finished. If each scene of reproduced video data is made to correspond to a time point, each object is also designated by the start time and end time assigned to each object. In DVD contents 102, since each scene of reproduced video data is made to correspond to a time point, each object appearing during the reproduction of moving picture contents can be designated by the start time and end time assigned to each object. In the case of FIG. 4, the period of the activated state of an object are designated by the start time (Start) and end time (End).

In FIG. 4, activated state of an object O₁ is started at a time point S₁ and ended at a time point E₁. Thus, the activated state of an object Oₖ (k = 1, 2, 3, 4, 5 or 6) is started at a time point Sₖ and ended at a time point Eₖ. The start and end of the activated state of an object can be performed independently of any other object. For example, the activated state of an object O₃ can be started and ended during the reproduction of an object O₂. Further, objects, for example, O₄, O₅ and O₆, can be activated, with their activation time periods overlapping each other.

Without using schedule data, object data can be activated at a desired time. In this case, the reproduction filename of DVD contents 102 is input, and all object data necessary for a to-be-reproduced file designated by the reproduction filename is set in a ready state.

However, a lot of time is required to make, in a ready state, all object data necessary for the to-be-reproduced file, since the object data needs to be read and stored into the internal memory of the V-click engine 36. Further, if a great amount of object data needs to be made in a ready state, it is very possible that the capacity of the internal memory of the V-click engine 36 may become short, and at worst, the object data cannot be activated.

As shown in FIG. 4, in schedule data, object data for activating a predetermined object is read in association with the start time of the activated state of the object data, which requires a low memory consumption and hence reduces the possibility of the internal memory capacity of the V-click engine 36 becoming short. Moreover, schedule data can minimize the amount of object data unnecessary at a certain time, thereby enabling more effective use of the internal memory of the V-click engine 36. As a result, the time required for displaying an object can be minimized.

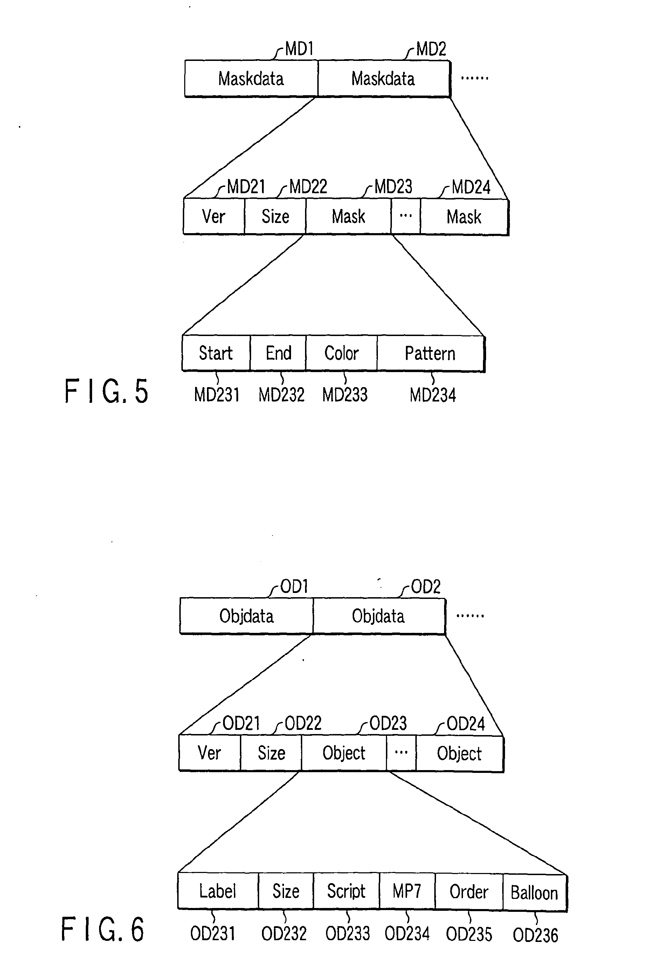

The structure of mask data is described with reference to FIG. 5, on the basis of which a moving picture is subjected to mask processing.

In FIG. 5, mask data items MD1, MD2, ··· are shown as "Maskdata". In general, a plurality of mask data items MD1, MD2, ··· are provided as shown in the top portion of FIG. 5. These mask data items are of different versions (Ver). In accordance with the reproduction capability of the video reproduction apparatus 1, mask data of a certain version is read. In other words, different mask data items are read if video reproduction apparatuses 1 of different reproduction capabilities are used. Further, the video data reproduction apparatus 1 may be constructed so that it is provided with a version corresponding to its reproduction capability, and this version is automatically referred to, thereby reading mask data corresponding thereto.

As seen from the middle portion of FIG. 5, the mask data MD2 comprises three types of field - fields for the above-mentioned "version" (Ver) MD21, "size" (Size) MD22 and "mask" data items (Mask) MD23, ···, MD24.

The "size" MD22 contains a numerical value indicative of the data capacity of the "mask" MD23. The "size" MD22 also contains a numerical value used as an offset value. This value is used for skipping to next mask data having a version different from selected "version" MD21, if the selected version data is not suitable for the video reproduction apparatus 1. If a break point can be set between subsequent "version" data items, the "size" can be dispensed with.

The "mask" data items MD23, ···, MD24 are each used to preset the color of a mask and the reproduction start position and end position of a mask pattern. If mask data manages a plurality of masks, it has a plurality of "mask" data items MD23, ···, MD24.

As shown in the bottom portion of FIG. 5, the "mask" MD23 has four types of field. Specifically, the "mask" MD23 comprises "start timestamp" MD231 (Start), "end timestamp" MD232 (End), "color" MD233 (Color) and "pattern" MD234 (Pattern).

The "start timestamp" MD231 indicates the reproduction start time of a "mask" MD23 designated by the "color" MD233 and the "pattern" MD234 contained in the "mask" MD23 related to the "start timestamp" MD231, or indicates the reproduction start position of the "mask" MD231 in the moving picture contents.

The "end timestamp" MD232 indicates the reproduction end time of the "mask" MD23 designated by the "color" MD233 and the "pattern " MD234 contained in the "mask" MD23 related to the "end timestamp" MD232, or indicates the reproduction start position of the "mask" MD23 in the moving picture contents.

As described above with reference to FIG. 4, in the schedule data, there is a case where before the activated state of the object that started at the start time SD233 is finished, further the activated state of another object is started, as in the case of the objects O₂ and O₃ or the objects O₄, O₅ and O₆. On the other hand, in the case of the "mask" MD23, no further reproduction is started before reproduction that started at the time indicated by the "start timestamp" MD231 is finished. In other words, during reproduction of a certain mask, no other mask is reproduced.

The "color" MD233 designates the color of a mask. The "pattern" MD234 designates a mask pattern. Mask patterns are bit maps of, for example, 32 × 32.

In the example of FIG. 5, a plurality of mask data items MD1, ···, MD2 are shown. However, there is a case where only one mask data item is used. Further, where only one version is imparted to mask data, the "version" MD21 field is not needed.

The structure of object data is described with reference to FIG. 6.

In FIG. 6, object data items OD1, ..., OD2 are shown as "Objdata". In general, a plurality of object data items OD1, ···, OD2 are provided as shown in the top portion of FIG. 6. These object data items are called, as a whole, an "object file". The object data items are of different versions (Ver). In accordance with the reproduction capability of the video reproduction apparatus 1, object data of a certain version is read. In other words, different object data items are read if video reproduction apparatuses 1 of different reproduction capabilities are used. Further, the video data reproduction apparatus 1 may be constructed so that it is provided with a version corresponding to its reproduction capability, and this version is automatically referred to, thereby reading object data corresponding thereto.

As seen from the middle portion of FIG. 6, the object data OD2 comprises three types of field - fields for the above-mentioned "version" (Ver) OD21, "size" (Size) OD22 and "object" data items (Object) OD23, ···, OD24. The "size" OD22 contains a numerical value indicative of the data capacity of the object data OD2. The "size" OD22 also contains a numerical value used as an offset value. This value is used for skipping to next object data having a version different from selected "version" OD21, if the selected version data is not suitable for the video reproduction apparatus 1. If a break point can be set between subsequent "version" data items, the "size" OD22 can be dispensed with.

The "object" data items OD23, ···, OD24 are each used to determine the operation of an object when the object is activated. If object data OD2 manages a plurality of objects, it has a plurality of "object" data items OD23, ···, OD24.

As shown in the bottom portion of FIG. 6, the "object" OD23 has six types of field. Specifically, the "object" OD23 has fields for "label" (Label) OD231, "size" (Size) OD232, "script" (Script) OD233, "MPEG7 field" (MP7) OD 234, "order" (Order) OD235 and "balloon" (Balloon) OD236. The "label" OD231 contains a name corresponding to an object managed by the "object" OD23. This name is, for example, an object name or object identifier. Referring to the "label" OD231 and the "object filename" SD235 of schedule data, the activated state of an object based on the schedule data is performed.

The "size" OD232 contained in the "object" OD23 contains a numerical value indicative of the data capability of the "object" OD23. The "size" OD232 also contains a numerical value used as an offset value. This value is used for skipping the "object" OD23 and seeking the next "object" or the "object" OD24 that is the last "object" of the object data, if the selected "label" OD231 does not the object corresponding to the video data contents to be reproduced by the video reproduction apparatus 1. If a break point can be set between subsequent object data items, the "size" OD232 can be dispensed with.

The "script" OD233 contains a script to be executed by the video reproduction apparatus 1 if a user click event (V-click) hits an object. The "script" OD233 may contain a URL, to which jumping is performed when a user click event (V-click) hits the object. Further, the "script" OD233 may contain no information.

The "MPEG7 field" OD234 contains data defining the area, configuration or a position of an object that moves in a moving picture, or data defining the time related to the movement of the object. The data contained in the "MPEG7 field" OD234 relates to a moving picture in a three-dimensional area as a space-time (two-dimensional plane + time). Further, the "MPEG7 field" OD234 contains one or more reference time points, and an interpolation logic for performing interpolation on the configuration of the object between the reference time points on the basis of the reference time points and an object configuration. The "MPEG7 field" OD234 also contains a determination logic for determining whether or not the object has been clicked.

There are many data formats for the "MPEG7 field" OD234. The "MPEG7 field" OD234 can use various methods to determine whether or not the object is hit by a V-click corresponding to each data format. For example, the object-area-information describing or determining methods disclosed in Jpn. Pat. Appln. KOKAI Publications Nos. 2000-285253, 2001-118075 and 2001-111996, etc. may be used.

The "order" OD235 contains data used to determine, if the object data OD2 manages a plurality of objects, the order of overlapping of the objects when moving picture contents is reproduced. In the example of FIG. 6, the "order" OD235 contained in the "object" OD23 or OD24 contains data used to determine the order of overlapping of the objects described in the "object" OD23 or OD24.

For example, the "order" OD235 contains a nonnegative integer. If the "order" OD235 corresponding to a certain object contains a higher value than that corresponding to another object, the former object is superposed upon the latter object. The numerical value contained in the "order" OD235 is determined when object data is created. Further, if a certain object is never be superposed on any other object, the "order" OD235 field itself may be omitted, assuming that the "order" OD235 corresponding to this certain object may be made to contain a default value of, for example, 0, and the "order" OD235 can be dispensed with.

The "order" OD235 may be needed when two or more objects are simultaneously hit by a click event (V-click). More specifically, the "order" OD235 may be needed when a plurality of objects exist at a single time point in a moving picture, and should be simultaneously hit by one V-click. In this case, the following three operations, for example, can be performed:
(1) The scripts corresponding to all the objects to be hit are executed;
(2) Only the script corresponding to the object that is defined to be displayed on the uppermost layer is executed; and
(3) Only the scripts are executed, which correspond to the objects that range from the object to be displayed on the uppermost layer to an object on a predetermined lower layer.

In the operations (2) and (3), it is necessary to determine the order of some objects, therefore the scripts corresponding to these objects must be executed with reference to the above-mentioned "order" OD235. On the other hand, in the operation (1), it is not necessary to arrange the object in order, therefore the "order" OD235 is not needed.

The "balloon" OD236 contains data concerning a "balloon" displayed near an object in reproduced video data contents. Specifically, the "balloon" OD236 contains, for example, a balloon text, font name, font size, font color, the background color of characters in a balloon, and boundary color. The balloon function is not indispensable. If this function is not needed, it is sufficient if no data is contained in the field of the "balloon" OD236. Of course, if the balloon function is not needed, the "balloon" OD236 field itself may be omitted.

In the above, schedule data and object data are provided separately, and the object filename or URL of the object data is input in the object filename SD235 field (Filename) of the schedule data. Instead of providing the "object filename" SD235, the schedule data and the object data may be formed integral as one body.

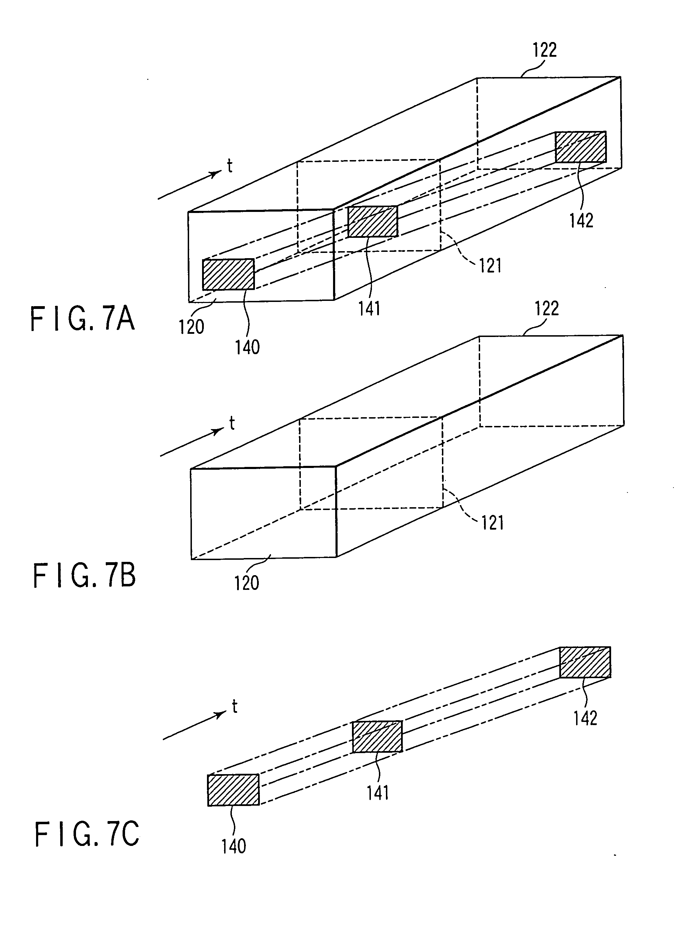

FIG. 7A shows the movement with time of an object in frames. FIG. 7B shows the frames appearing in FIG. 7A. FIG. 7C shows the movement of the object appearing in FIG. 7A.

In FIG. 7A, reference numeral 120 denotes a start frame that contains an object, reference numeral 122 an end frame that contains the object, reference numeral 121 a mid frame that contains the object, reference numeral 140 the area of the object in the start frame 120, reference numeral 142 the area of the object in the end frame 122, and reference numeral 141 the area of the object in the mid frame 121. FIG. 7B shows the frames 120, 121 and 122 extracted from FIG. 7A. Further, FIG. 7C shows the objects 140, 141 and 142 extracted from FIG. 7A.

In the example of FIG. 7A, the object moves from the start frame 120 to the end frame 122, i.e., from the left side of the video display window 81 to the right side. The object areas 140, 141 and 142 indicate the positions of the object assumed when the object is moving from the left side to the right side.

When, for example, a user clicks (V-click) a point inside an object area included in one of the frames ranging from the start frame 120 to the end frame 122, the determination algorithm employed in the apparatus determines that the object is hit. In another case, when a user clicks (V-click) a point inside or near an object area, the determination algorithm determines that the object is hit.

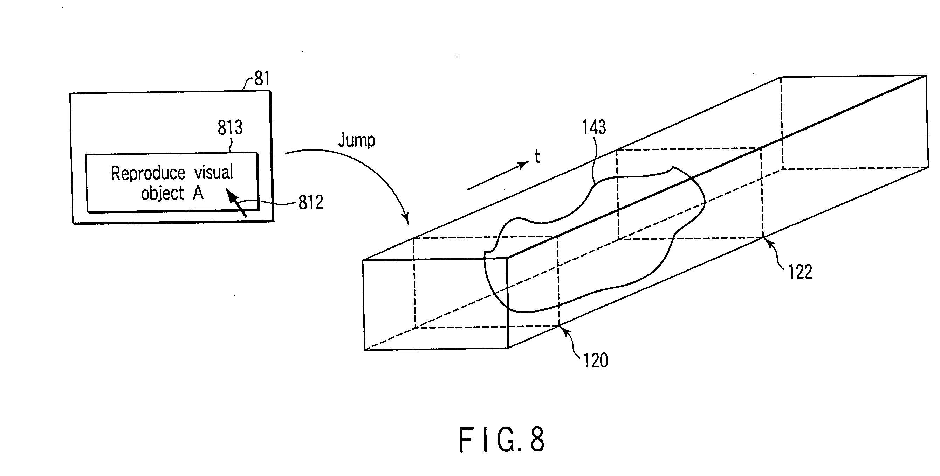

Here a reverse link operation is described. FIG. 8 is a view useful in explaining the reverse link operation.

An object jump button 813 that can be clicked is displayed on the video display window 81. An instruction for, for example, reproducing an object related to this button is written on the object jump button 813. Upon clicking the object jump button 813, for example, reproduction is designated on the basis of the filename of a to-be-reproduced file in DVD contents 102, the label of an object, and the reproduction start time and end time of the object. In the example of FIG. 8, a message "Reproduce Visual Object A" is placed on the object jump button 813. Here the Visual Object is the object that is overlaid on the video data contents and is visualized in reproduction. There may be another example, in which the HTML text displayed on the information display window 82 of FIG. 2 contains, as tag data, the filename of a to-be-reproduced file in DVD contents 102, the label of an object, and the start and end times of the object, and the video data contents corresponding to the object is reproduced on the video display window 81 when a user clicks a tag corresponding to the tag data.

When a user moves the cursor 812 to the object jump button 813 and clicks the button, a moving picture in the video display window 81 is switched to a moving visual object A 143. The moving visual object A 143 is reproduced during the time ranging from the start frame 120 to the end frame 122.

The object jump button 813 is associated with object data corresponding to the visual object A 143. When the object jump button 813 is clicked by the cursor 812, the object data corresponding to the visual object A 143 is read to thereby reproduce the object. Specifically, as described above, object data that contains a to-be-reproduced object is retrieved from the object file on the basis of the label of the object. Further, object data may be retrieved using schedule data.

When, for example, a script of ENAV contents 101 is executed, an object in a moving picture can be displayed, highlighted, in association with the reverse link operation.

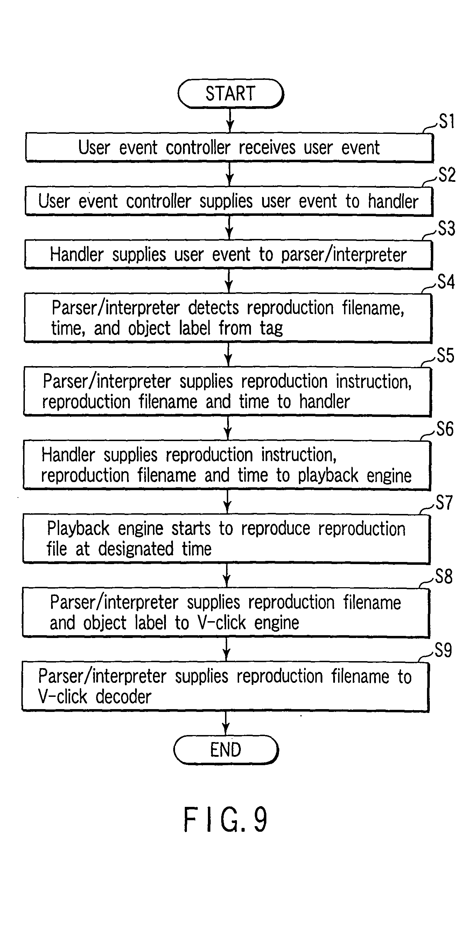

FIG. 9 is a flowchart useful in explaining the reverse link operation of the video reproduction apparatus 1.

When a user clicks the object jump button 813 in the video display window 81 or the link 821 in the information display window 82, the user event controller 33 receives this click as a user event signal (step S1) Since this user event signal corresponds to the reverse link operation, the user event controller 33 outputs the user event signal to the handler 34 (step S2).

The handler 34, in turn, outputs the user event to the parser/interpreter 35 (step S3). The parser/ interpreter 35 reads, from tag data contained in the user event signal, the label and start and end times of an object to be activated by the reverse link operation, and also the filename of a to-be-reproduced file in DVD contents 102 corresponding to the object (step S4).

The parser/interpreter 35 generates a reproduction instruction signal on the basis of the start and end times and filename of the to-be-reproduced file in the DVD contents 102 read at the step S4, and outputs the signal to the handler 34 (step S5). The reproduction instruction signal has information concerning the reproduction filename, and the start and end times of the to-be-reproduced DVD contents 102. An object generated at a later step by the AV renderer 31 is overlaid on the moving picture corresponding to the to-be-reproduced file in the DVD contents 102. Thus, the moving picture of the DVD contents 102 is synthesized with a moving picture as the object.

The handler 34 supplies the playback engine 2 with the instruction signal for reproducing the DVD contents 102 (step S6). Upon receiving the reproduction instruction signal, the playback engine 2 causes the reproduction of the to-be-reproduced file in the DVD contents 102 to start at the designated start time (step S7).

The parser/interpreter 35 supplies the V-click engine 36 with the start time and the end time, the label of the to-be-reproduced object and the reproduction filename (filename of the to-be-reproduced file in the DVD contents 102) read at the step S4 (step S8). The V-click engine 36 reads schedule data corresponding to the reproduction filename of the DVD contents 102 from ENAV contents 101. Referring to the label and the schedule data of the object, the V-click engine 36 acquires object data corresponding to the object, thereby preparing execution of the object.

The parser/interpreter 35 outputs the reproduction filename of the DVD contents 102 to the V-click decoder 321 (step S9). On the basis of the reproduction filename of the DVD contents 102, the V-click decoder 321 executes, for example, mask processing and balloon processing. Mask processing is executed using mask data read from the ENAV contents 101, while balloon processing is executed using the object data.

At the start time, the moving picture of the DVD contents 102 and the object are reproduced. At the end time, the execution of the object is stopped.

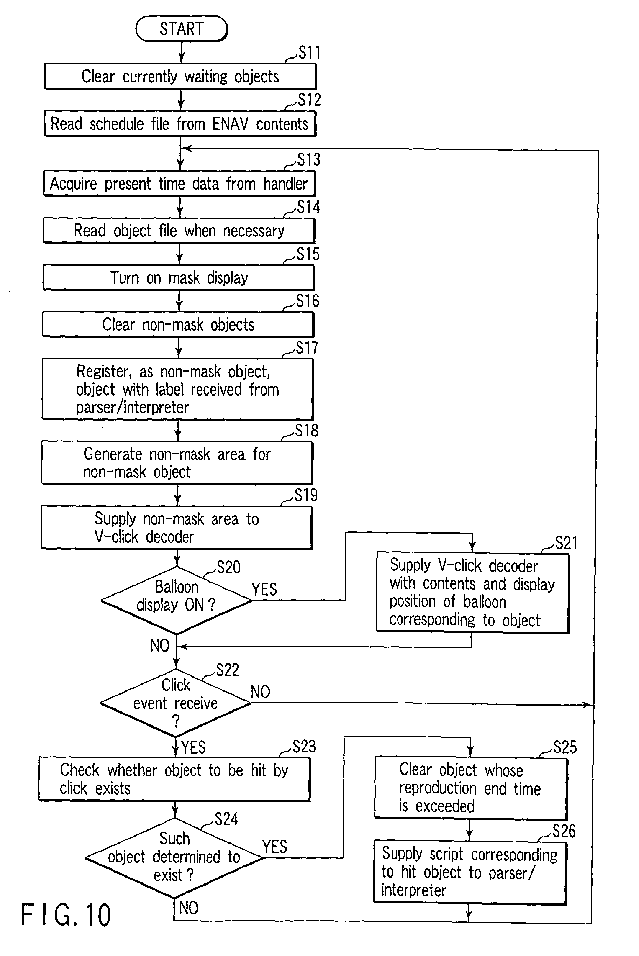

FIG. 10 is a flowchart useful in explaining the operation of the V-click engine 36 during the reverse link operation of the video reproduction apparatus 1.

Firstly, all objects currently kept ready in the internal memory of the V-click engine 36 are cleared therefrom (step S11).

A schedule file corresponding to the filename of to-be-reproduced DVD contents 102 supplied from the parser/interpreter 35 is read from ENAV contents 101 (step S12).

Subsequently, present time data is acquired from the handler 34 (step S13). In this embodiment, the playback engine 2 supplies a timestamp to the handler 34 periodically or as the occasion demands. On the schedule file acquired at the step S12, it is determined whether or not there is object data to be reproduced at the present time. The object file contained in all to-be-reproduced objects is read (step S14). For example, if the schedule file specifies that the reproduction start and end times of the object with a label of "00005" are "001333" and "002000", an object file that contains the definition of the object is read from the ENAV contents 101 by the time of "001333".

On the basis of the read object file, the objects are made in a ready state. That is, these objects are internally registered as objects to be subjected to a determination as to whether or not a click time and the position corresponding to a click event (V-click) signal hits the objects. Since the V-click engine 36 has already read the schedule data, it can immediately detect object data corresponding to each object that satisfies the above condition.

Mask display is turned on (step S15). If there is any non-mask object currently internally registered, the V-click engine 36 clears it (step S16), and registers, as the label of a non-mask object, the label of each object supplied from the parser/interpreter 35 (step S17). For example, ENAV contents 101 contain the label of each non-mask object to be registered, and registration is performed on the basis of this label.

The configuration of a non-mask object at the present time is computed, and the area of the non-mask object is generated on the basis of the computation result (step S18). The resultant non-mask area is output to the V-click decoder 321 (step S19). If a plurality of non-mask areas exist, the logical sum of the non-mask areas is supplied as the non-mask area to the V-click decoder 321.

It is determined whether or not balloon display is ON, and if balloon display is ON, the program proceeds to a step S21. If, on the other hand, balloon display is OFF, the program proceeds to a step S22. At the step S21, the position of an object corresponding to a balloon to be displayed is detected, thereby computing the position of the balloon, and supplying the V-click decoder 321 with the contents and the position of the balloon. After that, the program proceeds to the step S22. The balloon display position is predetermined. It is, for example, above and to the right of an object. The balloon display position may be made changeable, such as to be left or right of an object, or above left or right of the object, by appropriately changing the variable of the V-click engine 36.

Further, there may be a case where the labels of a number of objects are pre-registered as balloon display targets in the V-click engine 36. Such registration is made referring to, for example, ENAV contents 101 that stores the labels of objects as to-be-registered balloon display targets.

When a user clicks the screen of the video reproduction apparatus 1, using a remote controller or mouse, a click event signal is generated. This click event signal is output to the V-click engine 36 together with click position information. At the step S22, it is determined whether or not a click event signal is input. If no click event signal is input, the program returns to the step S13, whereas if a click event signal is input, the program proceeds to a step S23. At the step S23, a currently valid object is detected which contains the space-time point designated by the click position and the present time, i.e., which is hit by the above click.

At the next step S24, it is determined whether or not there is an object hit by the click. If no such object exists, the program returns to the step S13, whereas if such an object exits, the program proceeds to a step S25. At the step S25, any object whose reproduction end time has been exceeded is cleared. The V-click engine 36 contains objects that are ready for a click, mask display and balloon display. The V-click engine 36 compares the reproduction end time of each object with the present time, thereby clearing, from the internal memory, any object whose reproduction end time has been exceeded. A script for any object contained in the non-cleared objects and hit by the click is sent to the parser/interpreter 35 (step S26), followed by the program returning to the step S13.

As described above, an object in a moving picture is called for by a user click on a browser screen, thereby realizing a reverse link operation. Further, this object is highlighted or displayed in a balloon as a result of mask exclusion.

In the example of FIG. 10, only one object is hit by a click, therefore no determination concerning "priority" between a plurality of objects is performed using numerical values related to "order". If order data is used as previously mentioned, even a plurality of objects that are hit by one click can be processed.

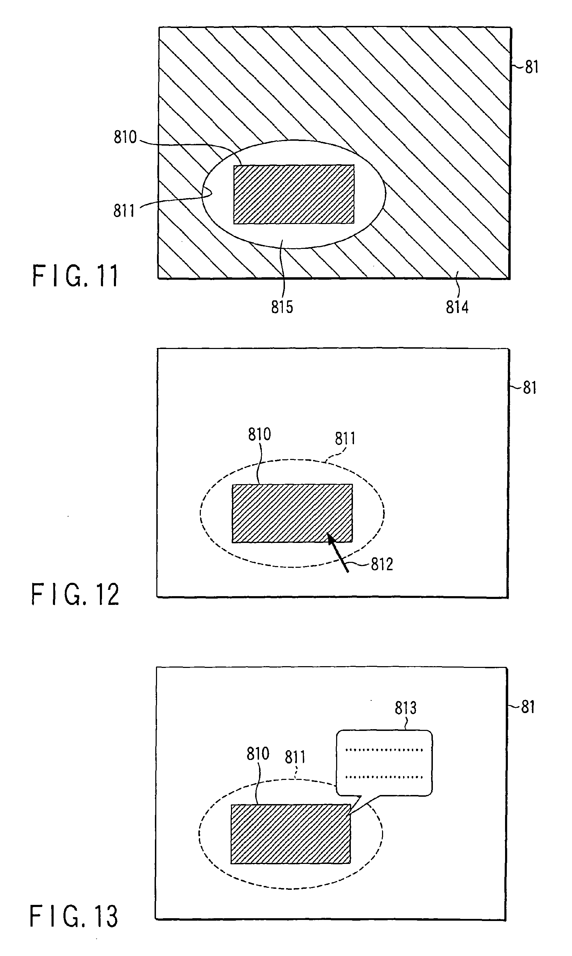

Referring to FIGS. 11 and 12, the relationship between a visual object 810 and object 811 in a moving picture contained in DVD convents 102 will be described.

FIG. 11 is a view showing a video display window in which mask processing is executed.

Assuming that the interior of the object 811 is a non-mask area 815, and the area in the video display window 81 other than the non-mask area 815 is a mask area 814, the mask area 814 is subjected to mask processing. As a result, the object 811 or visual object 810 can be highlighted.

There are various types of mask processing. For example, a certain mask image is displayed instead of a contents image in a mask area, a mask image is superposed upon a contents image in a mask area, or the brightness or color saturation of a mask area is reduced. In the embodiment, a mask image is superposed upon a contents image in a mask area.

FIG. 12 is a view illustrating a state in which the visual object 810 and the cursor 812 overlap.

FIG. 12 shows an example of a relationship between the visual object 810 and object 811 in one of the frames ranging from the start frame 120 to the end frame 122 shown in FIG. 7A. In the example of FIG. 12, a rectangular visual object 810 exists in a screen image, and an elliptic object 811 slightly larger than the visual object 810 is defined so that a user can easily click the visual object.

As described above, the object 811 may be displayed or may not be displayed. When the object 811 is not displayed, the user can see only the visual object 810. In this case, when the user clicks the visual object 810, the object 811 is actually V-clicked.

Of course, the shape of the objects is not limited to a rectangle or ellipsoid.

FIG. 13 illustrates a state in which a balloon is protruded from the visual object 810.

The balloon function is a variation of the function of displaying information related to the visual object 810. A balloon in which, for example, an explanation sentence related to the visual object 810 is written is displayed near the visual object 811 on the video display window 81, as shown in FIG. 13.

In the descriptions so far, in the reverse link operation, when a user clicks, for example, a browser screen button or link (when the user clicks, for example, the link 821 on the window 82 of FIG. 2), if this button or link is associated with an object in a moving picture, this object is referred to. Further, the reverse link operation enables an object in a moving picture to be displayed highlighted when, for example, a script in ENAV contents 101 is executed. In reverse link operation above described in detail, the object is treated the object displayed in the display. However the object may be treated the object non-displayed in the display. In case that non-displayed object is treated, the reproduction of the video data contents can be started from the start time of the video data contents corresponding to the object.

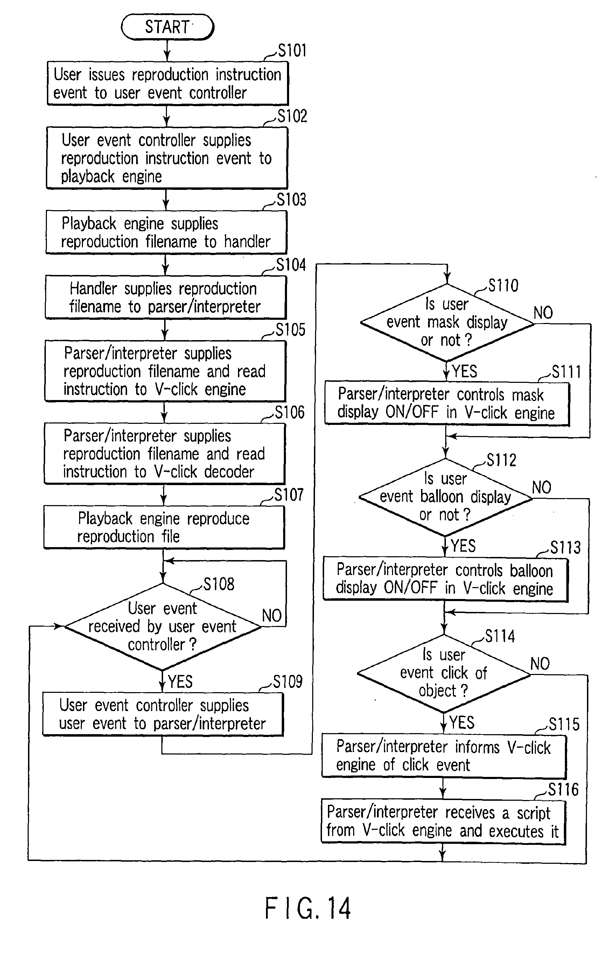

FIG. 14 is a flowchart useful in explaining the operation of the video reproduction apparatus 1 executed upon receiving a user event signal during its reproduction operation.

The instruction(s) contained in a user event signal received by the user event controller 33 will be described, taking a mask-display ON/OFF instruction, balloon-display ON/OFF instruction and click instruction as examples.

Firstly, a user clicks to generate a reproduction instruction event signal, and the user event controller 33 receives this event signal (step S101). The user event controller 33, in turn, outputs the reproduction instruction event signal to the playback engine 2 (step S102). The playback engine 2 outputs the name of a to-be-reproduced file in DVD contents 102 to the handler 34 (step S103) .

The handler 34 outputs the reproduction filename of the DVD contents 102 to the parser/interpreter 35 (step S104). The parser/interpreter 35 supplies the V-click engine 36 with the reproduction filename and an instruction to read the reproduction filename (step S105). Similarly, the parser/interpreter 35 supplies the V-click decoder 321 with the reproduction filename and an instruction to read the reproduction filename (step S106). The V-click engine 36 reads the to-be-reproduced file in the DVD contents 102 corresponding to the reproduction filename, and waits for a mask-display ON/OFF event, balloon-display ON/OFF event or click event that may occur later. The V-click decoder 321 prepares for creating a mask or balloon on the basis of the non-mask area, the balloon contents and the balloon display position generated by the V-click engine 36.

The playback engine 2 starts to reproduce the to-be-reproduced file in the DVD contents 102 corresponding to the reproduction filename (step S107). At the step S107, during the reproduction of the file, the user event controller 33 assumes a waiting state for waiting for a user event signal. In this state, the user event controller 33 determines whether or not a user event signal has been generated (step S108). At the step S108, if the user event controller 33 determines that a user event signal has been generated, it outputs the user event signal to the parser/interpreter 35 via the handler 34 (step S109).

The parser/interpreter 35 determines whether or not the instruction contained in the user event signal is an instruction as to mask display ON/OFF (step S110). If the instruction is determined to be a mask instruction as to the mask display ON/OFF, the program proceeds to a step S111, whereas if the instruction is determined not to be the mask instruction as to the mask display ON/OFF, the program proceeds to a step S112.

At the step S111, the parser/interpreter 35 supplies the V-click engine 36 with an instruction to turn on or off mask display, followed by the program proceeding to the step S112. The V-click engine 36 stores an internal flag that indicates that mask display is in the ON or OFF state. At the step S112, the parser/interpreter 35 determines whether or not the instruction contained in the user event signal is a balloon instruction as to balloon display ON/OFF. If the instruction contained in the user event signal is determined to be the balloon instruction as to the balloon display ON/OFF, the program proceeds to a step S113, whereas if the instruction contained in the user event signal is determined not to be the instruction as to the balloon display ON/OFF, the program proceeds to a step S114.

At the step S113, the parser/interpreter 35 supplies the V-click engine 36 with an instruction to turn on or off balloon display, followed by the program proceeding to the step S114. The V-click engine 36 stores an internal flag that indicates that balloon display is in the ON or OFF state. At the step S114, the parser/interpreter 35 determines whether or not the instruction contained in the user event signal is an instruction to click an object. If the instruction is determined to be the instruction to click an object, the program proceeds to a step S115, whereas if the instruction is determined not to be the instruction to click an object, the program returns to the step S108.

At the step S115, the parser/interpreter 35 outputs a click event signal to the V-click engine 36, and also outputs, to the engine 36, the time of the occurrence of a click corresponding to the click event signal and the position of the click on the video display window 81.

The parser/interpreter 35 receives a script corresponding to the instruction contained in the click event signal from the V-click engine 36, thereby executing the script (step S116). After the step S116, the program returns to the step S108, where the user event controller 33 monitors occurrence of another user event.

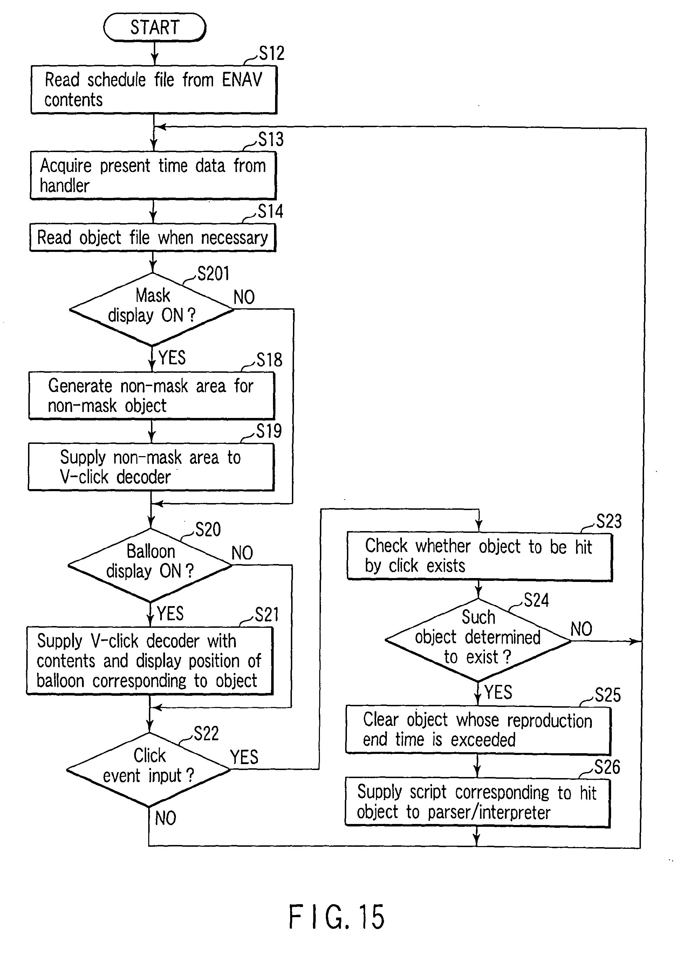

FIG. 15 is a flowchart useful in explaining an operation of the V-click engine 36 shown in FIG. 1. This operation corresponds to the operation of the V-click engine 36 illustrated in FIG. 14. Further, the same operations as illustrated in FIG. 10 are denoted by corresponding reference numerals and their explanations are omitted.

As described above referring to FIG. 10, the V-click engine 36 makes an object in a waiting state on the basis of the read object data, and then determines whether or not mask display is ON. As described at the step S111 of FIG. 14, the ON/OFF Of mask display is stored in the form of an internal flag of the V-click engine 36. If mask display is ON, the program proceeds to a step S20. The processing later is the same as that described with reference to FIG. 10.

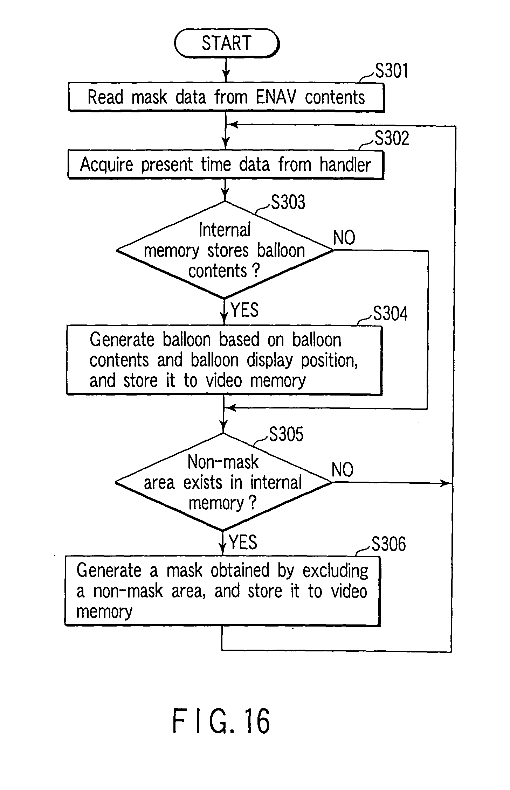

FIG. 16 is a flowchart useful in explaining the operation of the V-click decoder 321 shown in FIG. 1.

The V-click decoder 321 receives, from the V-click engine 36, V-click engine data , such as a non-mask area, the contents and the position of a balloon, etc., when necessary, and appropriately processes it.

Upon receiving, from the parser/interpreter 35, an instruction to read a reproduction filename and a corresponding to-be-reproduced file, the V-click decoder 321 reads mask data corresponding to the reproduction filename (step S301). Further, the V-click decoder 321 acquires present time data from the handler 34 (step S302).

Upon receiving the balloon contents and position from the V-click engine 36, the V-click decoder 321 stores them in its internal memory. If the internal memory already stores the balloon contents and the position, they are replaced with the input ones. Specifically, the internal memory is checked and it is determined whether or not the balloon contents and the position are stored. If they are stored, the program proceeds to a step S304, whereas if they are not stored, the program proceeds to a step S305. At the step S304, a balloon is generated from the stored balloon contents and the position, and writing the balloon to a video memory.

Upon receiving a non-mask area from the V-click engine 36, the V-click decoder 321 stores it in the internal memory. If the internal memory already stores a non-mask area, this area is replaced with the input one. Specifically, the internal memory is checked and it is determined whether or not a non-mask area is stored. If a non-mask area is stored, the program proceeds to a step S306, whereas if it is not stored, the program returns to the step S302. At the step S306, a mask, in which the non-mask area is excluded, is generated and recorded to the video memory. Further, the V-click decoder 321 generates a mask using a pattern and color designated by mask data obtained at the present time. According to the embodiment, the video data reproduction apparatus can have an effective navigation function for video data contents. For example, the video data reproduction apparatus can do the reverse link operation and effectively display an object.

### (Second Embodiment)

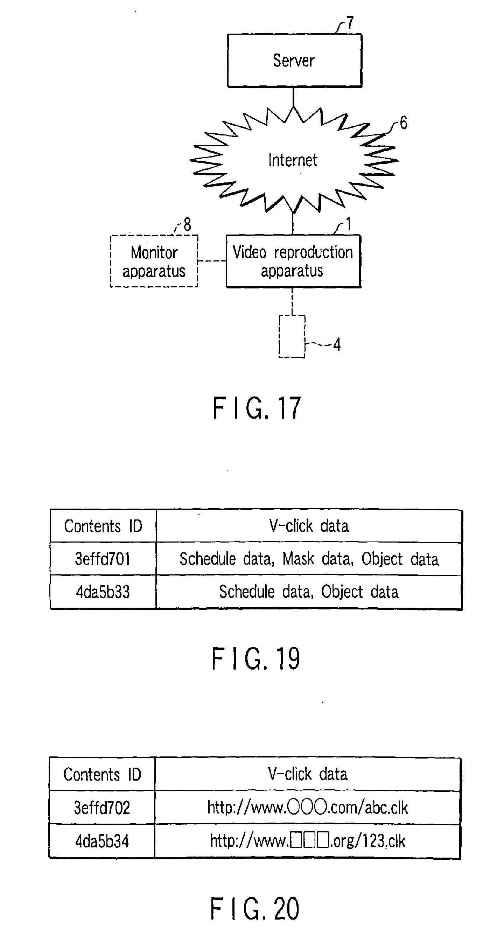

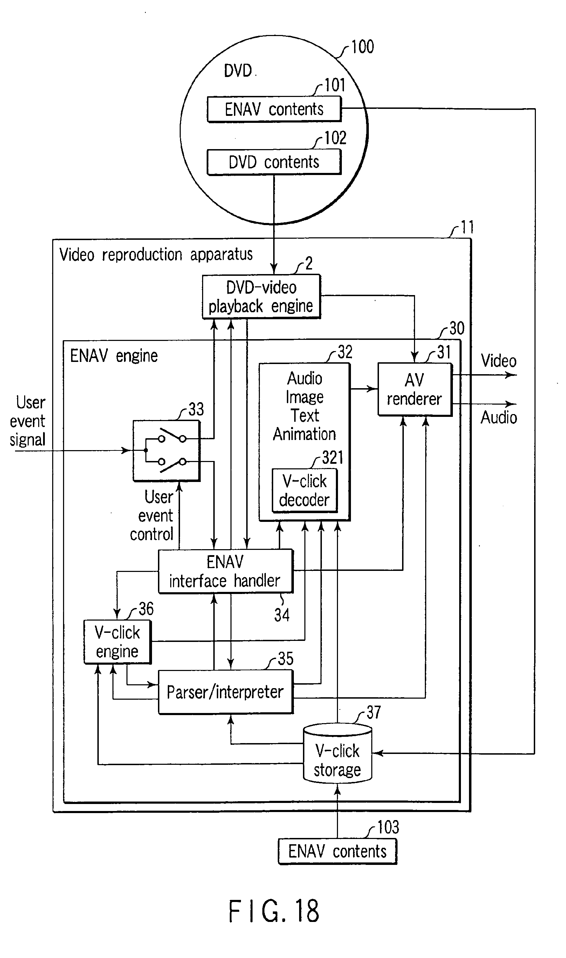

FIG. 17 shows a state in which the video reproduction apparatus 1 is connected to a server 7 via the Internet 6.

In the second embodiment, the video reproduction apparatus 1 can communicate with a desired server 7 via a network (hereinafter referred to as the "Internet") 6.

A description will now be given, in particular, of the case where V-click data is supplied to ENAV contents 101.

ENAV contents 101 can be supplied to certain DVD contents 102 in various ways: (1) As in the first embodiment, ENAV contents 101 for corresponding particular DVD contents 102 is recorded to a DVD 100 that contains the particular DVD contents 102. (2) ENAV contents 103 for particular DVD contents 102 is provided via a certain server 7 on the Internet 6. The same ENAV contents as above can be also provided using a combination of the ways (1) and (2). Alternatively, a part of ENAV contents may be provided using the way (1), and another part of the ENAV contents be provided using the other way (2). The way (1) is advantageous in that no communication is needed. On the other hand, the way (2) is advantageous in that ENAV contents 101 can be easily updated (by, for example, fetching a newest object file via the Internet 6 to update the operation of an object hit by a click), or in that new ENAV contents can be easily provided even to a DVD 100 with no ENAV contents 101 shipped in the past.

In particular, if a user would like to use only V-click data recorded on a DVD 100, they do not have to load any unnecessary object into a memory in a video reproduction apparatus. This realizes low consumption of resources.

Further, if a user would like to use V-click data downloaded via the Internet 6, they can add the V-click data later to the contents of a DVD 100 that contains no V-click data. Thus, they can provide a new function utilizing a V-click to the DVD contents 102 that they already own. Moreover, even DVD contents 102 that already contains V-click data can be updated in its operation by acquiring new V-click data via the Internet.

In the above-described way (1), since ENAV contents 101 is recorded on a DVD 100, the playback engine 2 can read the ENAV contents 101 from the DVD 100.

In the way (2), since ENAV contents 103 is on the Internet 6, it is downloaded to the video reproduction apparatus 1 from a server 7 connected thereto and the Internet 6. Alternatively, ENAV contents 103 may be downloaded from a server to an apparatus (such as a PC, monitor apparatus 8, etc.) connected thereto via the Internet 6, and be transferred from this apparatus to the video reproduction apparatus 1. In this case, a URL indicative of the position of desired ENAV contents 103 on the Internet 6 (or the URL of an information site that can provide information used to acquire the first-mentioned URL) may be prestored in the video reproduction apparatus 1. If this URL is recorded on a DVD 100, the playback engine 2 reads it from the DVD 100.

Further, the video reproduction apparatus 1 may be connected to a home network that is connected to the Internet 6.

FIG. 18 is a block diagram illustrating a video reproduction apparatus 11 according to the embodiment.

The video reproduction apparatus 11 of this embodiment differs from the video reproduction apparatus 1 of FIG. 1 in that the former further comprises a V-click storage 37. The V-click storage 37 stores V-click data contained in ENAV contents 103 and downloaded via the Internet 6. Further, the storage 37 can also store V-click data contained in ENAV contents 101 recorded on a DVD 100. In this case, the video reproduction apparatus 11 can acquire a part of the ENAV contents 101 from the DVD 100, and another part of the ENAV contents 103 from the Internet 6.

Furthermore, the video reproduction apparatus 11 can be modified so that the V-click data of necessary ENAV contents 103 will be downloaded and used at once when needed, instead of employing the V-click storage 37 and storing V-click data in it.

It is a matter of course that any other data of ENAV contents may be downloaded and stored in a predetermined storage, or may be downloaded and used at once when needed, without storing it.

Otherwise, the video reproduction apparatus 11 of the embodiment is different to the video reproduction apparatus 1 of the first embodiment shown in FIG. 1. In the video reproduction apparatus 11, the parser/interpreter 35 executes processing for identifying the server. When the video reproduction apparatus 11 is connected to the server designated by a URL contained in the script of ENAV contents 101, the parser/interpreter 35 executes the processing for identifying the server. If the identification has succeeded, the parser/interpreter 35 supplies the server with a request for downloading V-click data.

The parser/interpreter 35 prestores a public key Pₖ corresponding to the secret key Sₖ of the server. Assume that the parser/interpreter 35 has received V-click data and data A from a server. At this time, the parser/interpreter 35 firstly computes a hash value H from the V-click data. The same function as that of the server is used to compute the hash value.

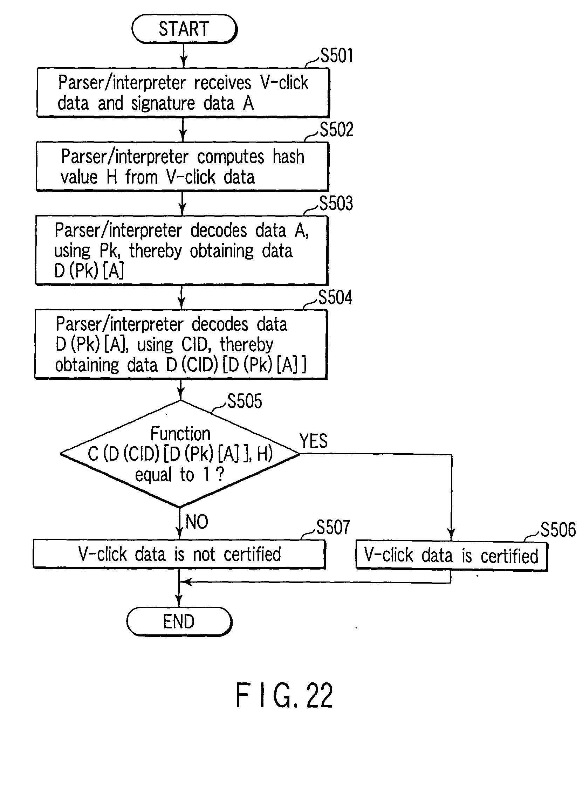

Subsequently, the parser/interpreter 35 decodes the data A, using Pₖ, thereby obtaining data D (Pₖ) [A]. The parser/interpreter 35 decodes the data D (Pₖ) [A], using a contents ID (CID), thereby obtaining D (CID) [D (Pₖ) [A]]. The parser/interpreter 35 determines whether or not the computed H is identical to D (CID) [D (Pₖ) [A]]. If they are identical, the parser/interpreter 35 determines that the V-click data received from the server is certified. If, on the other hand, they are not identical, the parser/interpreter 35 determines that the V-click data received from the server is not certified. The processing for identifying is described later in detail with reference to FIG. 22.

A description will be given of the case shown in FIG. 18 where the V-click storage 37 is provided, and V-click data is downloaded from a server 7 on the Internet 6 that provides ENAV contents 103, and is stored for use in the V-click storage 37.

In this case, the video reproduction apparatus 11 can download V-click data from a server 7 on the Internet 6 that provides ENAV contents 103, and can store it in the V-click storage 37.

The download of V-click data is started by, for example, a user's request, or by executing a script in ENAV contents 101 recorded on a DVD 100 or in downloaded ENAV contents 103. The downloaded V-click data is processed in the same manner as V-click data contained in ENAV contents 101 recorded on a DVD 100. To-be-downloaded V-click data is at least one of schedule data, mask data and object data. For example, the schedule data of ENAV contents recorded on a DVD 100 may be used, while object data and mask data may be replaced with those obtained from a server 7 on the Internet 6 that provides ENAV contents 103.

Downloaded V-click data is stored in association with DVD contents 102. Since DVD contents 102 has an ID dedicated thereto, downloaded V-click data can be stored in association with DVD contents 102. Further, even if contents ID is not explicitly defined, a hash value created on the basis of part or all of the contents can be used as an ID dedicated to the contents.

FIG. 19 is a view illustrating a table in which V-click data items are associated with contents IDs.

Downloaded V-click data items are stored in the V-click storage 37 in association with respective contents IDs, as shown in the table of FIG. 19.

FIG. 20 is a view illustrating a table in which URLs indicating the locations of V-click data items are associated with contents IDs.

In this example, downloaded V-click data is stored in the V-click storage 37 in the video reproduction apparatus 11. However, V-click data items themselves may be left in a server 7 on the Internet 6, and the video reproduction apparatus 11 may store URLs of those data items in association with contents IDs corresponding thereto. In this case, the V-click storage 37 stores, for example, the table as shown in FIG. 20.

In the table of FIG. 20, a file with an extension "clk" downloaded from the URL of each V-click data item is a library file. For example, this file is developed as schedule data, mask data and/or object data in association with a corresponding contents ID, as in the table of FIG. 19.

Although V-click data in ENAV contents is described in the embodiment, the same can be said of any other data in ENAV contents.

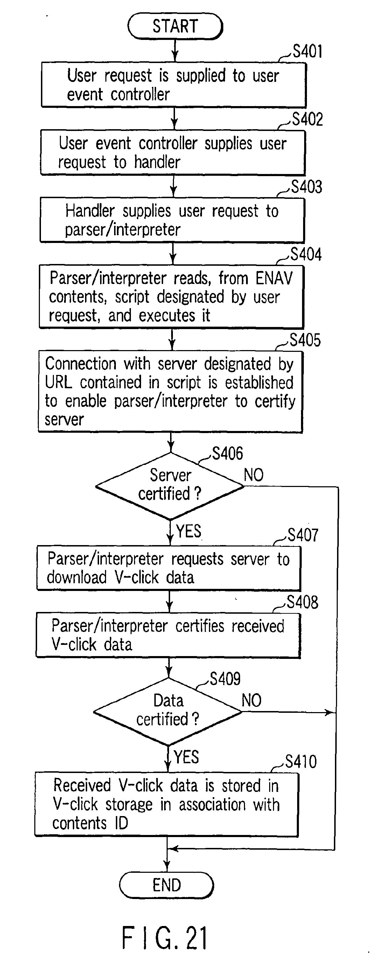

FIG. 21 is a flowchart useful in explaining the manner of downloading V-click data. Specifically, this flowchart illustrates a series of operations performed after a script in DVD contents 101 recorded on a DVD 100 is executed upon a user request using, for example, a button click, until V-click data is downloaded from ENAV contents 103 stored in a server 7 designated by the script.

FIG. 21 illustrates an example in which the video reproduction apparatus 11 is connected to the Internet 6, and V-click data is downloaded from a server 7 on the Internet 6 that provides ENAV contents 103.

A user request is input to the user event controller 33 (step S401). The user event controller 33, in turn, outputs the user request to the handler 34 (step S402). The handler 34 outputs the user request to the parser/interpreter 35 (step S403).

The parser/interpreter 35 reads a script designated by the user request from ENAV contents 101 recorded on the DVD 100, and executes it (step S404). The video reproduction apparatus 11 is connected to a server 7 on the Internet 6 that provides ENAV contents 103 and is designated by a URL in the script. The parser/interpreter 35 certifies the server 7 (step S405) .

It is determined whether or not the parser/interpreter 35 has succeeded in the certification of the server 7 (step S406). If the certification has succeeded, the program proceeds to a step S407, whereas if it has failed, this program is finished. At the step S407, the parser/interpreter 35 supplies the server 7 with a request for downloading V-click data.

If the video reproduction apparatus 11 has received V-click data as a response to the request from the server 7, the parser/interpreter 35 certifies the V-click data (step S408).

It is determined whether or not the parser/interpreter 35 has succeeded in the certification of the V-click data (step S409). If the certification has succeeded, the program proceeds to a step S410, whereas if it has failed, this program is finished. At the step S410, the V-click data received by the video reproduction apparatus 11 is stored in the V-click storage 37 in association with a corresponding contents ID.

If the server 7 is not certified at the step S406, or if the V-click data is not certified at the step S409, an error message may be displayed on the monitor apparatus 8.

FIG. 21 shows an example in which both the server 7 that provides ENAV contents 103 and V-click data are certified. However, the certification of the server 7 that provides ENAV contents 103 or that of V-click data, or both may be omitted. Further, even if means for storing downloaded ENAV contents 103, such as the V-click storage 37, is not employed, either the server 7 that provides ENAV contents 103 or V-click data, or both may be certified.

The certification of V-click data is advantageous in the following point:

If the specifications of V-click data are generally known and no certification is performed, anyone can theoretically create and use V-click data corresponding to arbitrary DVD contents 102. This may raise problems in copyrights or commercial morals. For example, any one can establish a link with a famous movie without permission of the owner of the copyright of the movie, thereby leading, to their E-commerce site, people who would like to see the movie. Therefore, it is desirable to certify V-click data in order to, for example, secure the quality of a link provided by V-click data and cater for users. The same can be said of the certification of a server 7 that provides ENAV contents 103.

In the second embodiment, a server 7 that provides ENAV contents 103 stores a certain secret key Sₖ, and the parser/interpreter 35 prestores a public key Pₖ corresponding to the server secret key Sₖ. The public key Pₖ is stored in, for example, a ROM area during manufacture.

A server 7 that provides ENAV contents 103 encodes the hash value H of V-click data using a contents ID (CID). The resultant data is expressed as E(CID)[H]. After that, the server 7 further encodes E(CID)[H] using Sₖ, thereby obtaining data A = E(Sₖ)[E(CID)[H]]. The server 7 supplies the V-click data with data A to the video reproduction apparatus 11, data A being used as a signature.

FIG. 22 is a flowchart illustrating certification of V-click data.

The video reproduction apparatus 11 receives V-click data with data A from the server 7, and supplies them to the parser/interpreter 35 (step S501). The parser/interpreter 35 computes the hash value H of the V-click data (step S502). To compute the hash value, the same function as that used in the server 7 that provides ENAV contents 103 is used.

Subsequently, the parser/interpreter 35 decodes data A using Pₖ, thereby obtaining certain data (step S503). This data is expressed as D(Pₖ)[A]. After that, the parser/interpreter 35 decides D(Pₖ)[A] using CID, thereby obtaining D(CID)[D(Pₖ)[A]] (step S504).

The parser/interpreter 35 determines whether or not the previously computed H is identical to D(CID)[D(Pₖ)[A]] (step S505). If they are determined to be identical at the step S505, the program proceeds to a step S506, whereas if they are determined not to be identical at the step S505, the program proceeds to a step S507. At the step S506, the V-click data has been certified. On the other hand, at the step S507, the V-click data has not been certified. At the step S505, function C (a, b) is used to determine whether or not the previously computed H is identical to D(CID)[D(Pₖ)[A]]. When using function C (a, b), "a" is compared with "b", and "1" is output if they are identical, whereas "0" is output if they are not identical. In other words, the parser/interpreter 35 determines whether function C (D(CID)[D(Pₖ)[A]],H) is 1 or 0.

The above-described certification procedure means the following:
E(CID)[H] is data that depends upon V-click data and CID. The encoding operation using Sₖ can be executed only by a server 7 that provides legitimate ENAV contents 103. Accordingly, E(Sₖ) [E(CID) [H]] can be created only by the server 7 that provides legitimate ENAV contents 103. If the video reproduction apparatus 11 correctly decodes a signature E(Sₖ)[E(CID)[H]] and confirms that the decoding result is identical to H, (i) the V-click data is certified to be legitimate, and (ii) it is confirmed that the V-click data corresponds to the contents with the contents ID (CID) .

The certification method of the invention is characterized in that a server 7 for providing ENAV contents 103 supplies the video reproduction apparatus 11 with a value obtained using V-click data, contents ID and a predetermined algorithm, and in that the video reproduction apparatus 11 certifies the legitimacy of the V-click data by comparing the supplied value with a value obtained using V-click data, contents ID and the same predetermined algorithm as the above.

The internal processing portion of the video reproduction apparatus of the embodiment can be realized only by hardware such as a semiconductor chip. Alternatively, a CPU is installed in the video reproduction apparatus and part or all of processing can be executed by software.

Although the above-described embodiments employ a DVD 100, a video reproduction apparatus that uses another recording medium can be embodied.

Further, the video reproduction apparatus can process video contents and corresponding ENAV contents 103 that are obtained via a communication medium, such as the Internet.

The flow charts of the embodiments illustrate methods and systems according to the embodiments of the invention. It will be understood that each block of the flowchart illustrations, and combinations of blocks in the flowchart illustrations, can be implemented by computer program instructions. These computer program instructions may be loaded onto a computer or other programmable apparatus to produce a machine, such that the instructions which execute on the computer or other programmable apparatus create means for implementing the functions specified in the flowchart block or blocks. These computer program instructions may also be stored in a computer-readable memory that can direct a computer or other programmable apparatus to function in a particular manner, such that the instruction stored in the computer-readable memory produce an article of manufacture including instruction means which implement the function specified in the flowchart block of blocks. The computer program instructions may also be loaded onto a computer or other programmable apparatus to cause a series of operational steps to be performed on the computer or other programmable apparatus to produce a computer programmable apparatus provide steps for implementing the functions specified in the flowchart block or blocks.

## Claims

1. A video data reproduction apparatus **characterized by** comprising:
means (33, 34, 36) for selecting an object to be reproduced in video data contents and obtaining a corresponding object related data, the object related data being related to the object and including a start time at which the object appears in the video data contents;
first acquisition means (36) for acquiring the start time from the object related data; and
means (2, 32, 31, 36) for start reproducing the video data contents based on the start time.

2. The video data reproduction apparatus according to claim 1, **characterized by** further comprising means (36, 321) for masking a mask area except for the object.

3. The video data reproduction apparatus according to claim 2, **characterized in that** the mask means comprises second acquisition means (321) for acquiring mask data, the mask data containing mask start time for masking the mask area and mask end time for masking the mask area.

4. The video data reproduction apparatus according to any one of claims 1 to 3, **characterized by** further comprising means (36, 321) for displaying such a balloon image on the object.

5. The video data reproduction apparatus according to claim 1, **characterized in that** the object related data further contains identification information for identifying the object, and the first acquisition means acquiring the start time referring to the identification information.

6. The video data reproduction apparatus according to claim 5, **characterized in that** the start time and the identification information are prepared in each object.

7. The video data reproduction apparatus according to any one of claims 1 to 6, **characterized in that** the reproduction means comprises third acquisition means (2, 32, 31, 36) for acquiring object data indicative of movement of the object.

8. The video data reproduction apparatus according to claim 7, **characterized in that** the object data contains shape data indicative of shapes of the object at a plurality of points in time during a certain period of time.

9. The video data reproduction apparatus according to claim 7 or 8, **characterized in that** the object data contains order data for determining an order in which a plurality of objects are superposed if the plurality of objects appear in the video data contents.

10. The video data reproduction apparatus according to any one of claims 7 to 9, **characterized in that** the object data contains balloon data indicative of information related to a balloon image.

11. The video data reproduction apparatus according to any one of claims 7 to 10, **characterized by** further comprising means (36) for keeping the object data in a waiting state in which the object can be reproduced, the reproduction means reproducing the object data kept in the waiting state, if the selecting means selects the object.

12. The video data reproduction apparatus according to any one of claims 1 to 11, **characterized in that** the reproduction means further comprises:
fourth acquisition means (2, 36) for acquiring a present reproduction time of the video data contents; and
starting means (2, 36) for starting reproduction of the object when the reproduction time reaches the start time.

13. The video data reproduction apparatus according to any one of claims 1 to 12, **characterized by** further comprising:
means (36) for designating a space-time position in the video data contents, the space-time position being determined from a time and a position;
first determination means (36) for determining whether or not the space-time position is positioned in the object; and
means (31, 32) for executing a particular processing if the determination means determines that the space-time position is positioned in the object.

14. The video data reproduction apparatus according to claim 13, **characterized in that** the executing means executes the particular processing including jumping to a certain linked page.

15. The video data reproduction apparatus according to claim 13, **characterized in that** the executing means executes the particular processing including a processing related to the object.

16. The video data reproduction apparatus according to any one of claims 1 to 15 and associated with a server, **characterized by** further comprising:
means (35) for connecting the apparatus to the server which distributes display data related to a display of the video data contents;
means (35) for performing a certification between the apparatus and the server;
second determination means (35) for determining whether or not the certification has succeeded;
fifth acquisition means (35) for acquiring the display data from the server if the second determination means determines that the certification has succeeded; and
third determination means (35) for determining whether or not the display data should be certified.

17. The video data reproduction apparatus according to claim 16, **characterized in that** the display data is at least one of the schedule data, the object data, and the mask data.

18. A video data reproduction method **characterized by** comprising:
selecting an object to be reproduced in video data contents;
obtaining a corresponding object related data, the object related data being related to the object and including a start time at which the object appears in the video data contents;
acquiring the start time from the object related data; and
starting reproducing the video data contents based on the start time.

19. The video data reproduction method according to claim 18, **characterized by** further comprising masking a mask area except for the object.

20. The video data reproduction method according to claim 19, **characterized in that** masking the mask area comprises acquiring mask data, the mask data containing start time for masking the mask area and mask end time for masking the mask area.

21. The video data reproduction method according to any one of claims 18 to 20, **characterized by** further comprising displaying such a balloon on the object.

22. The video data reproduction method according to any one of claims 18 to 21, **characterized in that** starting reproducing the video data contents comprises acquiring object data indicative of movement of the object.

23. The video data reproduction method according to claim 22, **characterized by** further comprising keeping the object data in a waiting state in which the object can be reproduced, starting reproducing the video data contents comprising reproducing the object data kept in the waiting state if the object is selected.

24. The video data reproduction method according to any one of claims 18 to 23, **characterized in that** starting reproducing the video data contents further comprises:
acquiring a present reproduction time of the video data contents;
starting reproduction of the object when the reproduction time reaches the start time; and

25. The video data reproduction method according to any one of claims 18 to 24, **characterized by** further comprising:
designating a space-time position in the video data contents, the space-time position being determined from a time and a position;
determining whether or not the space-time position is positioned in the object; and
executing a particular processing if it is determined that the space-time position is positioned in the object.

26. The video data reproduction method according to any one of claims 18 to 25, **characterized by** further comprising:
connecting the apparatus to a server which distributes display data related to a display of the video data contents;
performing a certification between the apparatus and the server;
determining whether or not the certification has succeeded;
acquiring the display data from the server if it is determined that the certification has succeeded; and
determining whether or not the display data should be certified.

27. A video data reproduction program stored in a medium which can be read by a computer, comprising:
means for instructing the computer to select an object to be reproduced in video data contents and obtain a corresponding object related data, the object related data being related to the object and including a start time at which the object appears in the video data contents;
first acquisition means for instructing the computer to acquire the start time from the object related data; and
means for instructing the computer to start reproducing the video data contents based on the start time.

28. The video data reproduction program according to claim 27, **characterized by** further comprising means for instructing the computer to mask a mask area except for the object.

29. The video data reproduction program according to claim 28, **characterized in that** the masking instruction means comprises second acquisition means for instructing the computer to acquire mask data, the mask data containing mask start time for masking the mask area and mask end time for masking the mask area.

30. The video data reproduction program according to any one of claims 27 to 29, **characterized by** further comprising means for instructing the computer to display such a balloon on the object.

31. The video data reproduction program according to any one of claims 27 to 32, **characterized in that** the reproduction instruction means comprises third acquisition means for instructing the computer to acquire object data indicative of movement of the object.

32. The video data reproduction program according to claim 31, **characterized by** further comprising means for instructing the computer to keep the object data in a waiting state in which the object can be reproduced, the reproduction instruction means instructing the computer to reproduce the object data kept in the waiting state, if selecting instruction means selects the object.

33. The video data reproduction program according to any one of claims 27 to 32, **characterized in that** the reproduction instruction means further comprises:
fourth acquisition means for instructing the computer to acquire a present reproduction time of the video data contents; and
means for instructing the computer to start reproduction of the object when the reproduction time reaches the start time.

34. The video data reproduction program according to any one of claims 27 to 33, **characterized by** further comprising:
means for instructing the computer to designate a space-time position in the video data contents, the space-time position being determined from a time and a position;
first determination means for instructing the computer to determine whether or not the space-time position is positioned in the object; and
means for instructing the computer to execute a particular processing if the determination means determines that the space-time position is positioned in the object.

35. The video data reproduction program according to any one of claims 27 to 34, the computer being associated with a server, **characterized by** further comprising:
means for instructing the computer to connect the apparatus to the server which distributes display data related to a display of the video data contents;
means for instructing the computer to perform a certification between the apparatus and the server;
second determination means for instructing the computer to determine whether or not the certification has succeeded;
fifth acquisition means for instructing the computer to acquire the display data from the server if the computer determines that the certification has succeeded; and
third determination means for instructing the computer to determine whether or not the display related data should be certified.

36. A video data reproduction apparatus which reproduces an object, the object being appearing in video data contents, the video data reproduction apparatus **characterized by** comprising:
first acquisition means (36) for acquiring schedule data which includes a start time at which the object appears in the video data contents;
second acquisition means (36) for acquiring the start time from the schedule data; and
means (2, 32, 31, 36) for starting reproducing the video data contents based on the start time.

37. The video data reproduction apparatus according to claim 36, **characterized by** further comprising means (36, 321) for masking a mask area except for the object.

38. The video data reproduction apparatus according to claim 37, **characterized in that** the mask means comprises third acquisition means (321) for acquiring mask data, the mask data containing mask start time for masking the mask area and mask end time for masking the mask area.

39. The video data reproduction apparatus according to any one of claims 36 to 38, **characterized by** further comprising means (36, 321) for displaying such a balloon on the object.

40. The video data reproduction apparatus according to any one of claims 36 to 39, **characterized in that** the schedule data further contains identification information for identifying the object, and the second acquisition means acquiring the start time referring to the identification information.

41. The video data reproduction apparatus according to claim 40, **characterized in that** the start time and the identification information are prepared in each object.

42. The video data reproduction apparatus according to any one of claims 36 to 41, **characterized in that** the reproduction means comprises fourth acquisition means (2, 32, 31, 36) for acquiring object data indicative of movement of the object.

43. The video data reproduction apparatus according to claim 42, **characterized in that** the object data contains shape data indicative of shapes of the object at a plurality of points in time during a certain period of time.

44. The video data reproduction apparatus according to claim 42 or 43, **characterized in that** the object data contains order data for determining an order in which a plurality of objects are superposed if the plurality of objects appear in the video data contents.

45. The video data reproduction apparatus according to any one of claims 42 to 44, **characterized in that** the object data contains balloon data indicative of information related to a balloon image.

46. The video data reproduction apparatus according to any one of claims 42 to 45, **characterized by** further comprising means (36) for keeping the object data in a waiting state in which the object can be reproduced, the reproduction means reproducing the object data kept in the waiting state.

47. The video data reproduction apparatus according to any one of claims 36 to 46, **characterized in that** the reproduction means comprises:
fifth acquisition means (2, 36) for acquiring a present reproduction time of the video data contents; and
start means (2, 36) for starting reproduction of the object when the reproduction time reaches the start time.

48. The video data reproduction apparatus according to any one of claims 36 to 47, **characterized by** further comprising:
means (36) for designating a space-time position in the video data contents, the space-time position being determined from a time and a position;
first determination means (36) for determining configured to determine whether or not the space-time position is positioned in the object; and
means (31, 32) for executing a particular processing if the determination means determines that the space-time position is positioned in the object.

49. The video data reproduction apparatus according to claim 48, **characterized in that** the executing means executes the particular processing including jumping to a certain linked page.

50. The video data reproduction apparatus according to claim 48, **characterized in that** the executing means executes the particular processing including a processing related to the object.

51. The video data reproduction apparatus according to any one of claims 36 to 50 and associated with a server, **characterized by** further comprising:
means (35) for connecting the apparatus to the server which distributes display data related to a display of the video data contents;
means (35) for performing a certification between the apparatus and the server;
second determination means (35) for determining whether or not the certification has succeeded;
sixth acquisition means (35) for acquiring the display data from the server if the second determination means determines that the certification has succeeded; and
third determination means (35) for determining whether or not the display data should be certified.

52. The video data reproduction apparatus according to claim 51, **characterized in that** the display data is at least one of the schedule data, the object data, and the mask data.
